# EUROPÄISCHE PATENTSCHRIFT

(11) **EP 2 804 763 B1**
(45) Veröffentlichungstag und Bekanntmachung des Hinweises auf die Patenterteilung: **02.05.2018**
(21) Anmeldenummer: 13700317.4
(22) Anmeldetag: 16.01.2013
(51) Int. Cl.: B42D 15/00

(54) **KUNSTSTOFFFOLIE ZUM BEDRUCKEN MITTELS DYE DIFFUSION THERMAL TRANSFER DRUCK**
PLASTIC FILM FOR PRINTING BY MEANS OF DYE DIFFUSION THERMAL TRANSFER PRINTING
FEUILLE EN MATIÈRE SYNTHÉTIQUE DESTINÉE À L'IMPRESSION À L'AIDE D'UNE DIFFUSION DE COLORANT PAR TRANSFERT THERMIQUE

(30) Priorität: 19.01.2012 EP 12151747
(43) Veröffentlichungstag der Anmeldung: 26.11.2014
(73) Patentinhaber: Covestro Deutschland AG, 51373 Leverkusen (DE)
(72) Erfinder: PUDLEINER, Heinz, 47800 Krefeld (DE); MEYER, Klaus, 41539 Dormagen (DE); TZIOVARAS, Georgios, 42275 Wuppertal (DE); YESILDAG, Mehmet-Cengiz, 51377 Leverkusen (DE); WONG, Chung Leung, Hong Kong (CN)
(74) Vertreter: Levpat
(86) Internationale Anmeldenummer: PCT/EP2013/050754
(87) Internationale Veröffentlichungsnummer: WO 2013/107777

(56) Entgegenhaltungen:
- EP-A2- 0 150 497
- EP-A2- 0 373 465
- EP-A2- 1 452 331
- DE-A1- 2 407 674
- DE-A1- 2 407 776
- JP-A- 2003 208 589
- US-A- 5 658 846
- ASHTON ET AL: "The Role of Phosphites in Stabilization of Non-Polyolefin Polymers", PLASTICS - THE MAGICAL SOLUTION : CONFERENCE PROCEEDINGS, ANTEC 2000, MAY 7 - 11, 2000, ORLANDO, FLORIDA, SOCIETY OF PLASTICS ENGINEERS, Bd. 3, 7. Mai 2000 (2000-05-07), Seiten 2818-2825, XP009159157, ISBN: 1-56676-855-1

## Beschreibung

Die Erfindung betrifft einen speziellen Schichtaufbau sowie eine spezielle Kunststofffolie zur Herstellung eines solchen Schichtaufbaus, welcher sich zum Bedrucken mittels Dye Diffusion Thermal Transfer Druck eignet, ein Verfahren zu dessen Herstellung sowie ein Sicherheits- und/oder Wertdokument enthaltend einen solchen Schichtaufbau.

Bei der Herstellung von Sicherheits- und/oder Wertdokumenten, insbesondere Identifikationsdokumenten in Form von Karten (ID-Karten), besteht der Bedarf nach farbiger Personalisierung der Dokumente ohne jedoch deren Fälschungssicherheit herabzusetzen. Die Aufbringung von Farbschichten, die innerhalb der ID-Karten aufgrund der fehlenden Kompatibilität mit den sie umgebenden Kunststoffschichten die Möglichkeit eines nachträglichen Aufbrechens und Verändern der Informationen ermöglichen würden, soll daher vermieden werden. In der Vergangenheit hat es viele unterschiedliche Ansätze gegeben, dieses Problem zu beseitigen und eine farbige Personalisierung mit hoher Fälschungssicherheit zu ermöglichen.

Eine davon besteht im Einsatz des Dye Diffusion Thermal Transfer Druck von farbigen Informationen auf Kunststoffsubstraten als Alternative zu anderen Druckverfahren, da dieser den Vorteil einer hohen Abbildegenauigkeit bei farbigem Druck bietet und mit diesem auch vor Ort personalisierte Bilder und Informationen in guter Qualität gedruckt werden können. Des Weiteren soll die Druckfarbe bei dieser Druckvariante in das zu bedruckende Kunststoffmaterial aufgenommen werden, so dass keine Sollbruchstellen für ein nachträgliches Auftrennen durch eine separate Farbschicht in den Dokumenten entstehen.

Bei der Verwendung von Kunststoffsubstraten für einen solchen Druck besteht aber das Problem, dass die Oberfläche des Kunststoffsubstrats eine ausreichende Aufnahmefähigkeit für die Druckfarbe bieten muss, ohne dass die Abbildungsschärfe und Farbintensität dadurch beeinträchtigt wird. In vielen Fällen ist insbesondere die Farbintensität der Druckbilder verbesserungsbedürftig.

In der Literatur sind bereits diverse Kunststoffmaterialien für die Bedruckbarkeit mittels Dye Diffusion Thermal Transfer Druck diskutiert worden. So eignen sich gemäß Slark et al., Polymer 40 (1999) 4001-4011 diverse Kunststoffe als Materialien für Farb-Akzeptor-Beschichtungen, ohne dabei jedoch konkrete Präferenzen zu nennen. WO 98/07573 A1 offenbart Farb-Akzeptor-Beschichtungen aus Polyvinylchlorid-Copolymeren. In Shearmur et al., Polymer 37, Vol. 13 (1996) 2695-2700 werden diverse Polyester und Polyvinylbutyral als mögliche Materialien für Farb-Akzeptor-Schichten untersucht. Keines dieser Dokumente beschäftigt sich jedoch mit der Farbintensität oder Abbildungsschärfe der erzielten Druckbilder.

US 5,334,573 untersucht geeignete Materialien mit der Zielrichtung, ein Ankleben der Farb-Akzeptor-Sheets an die Farb-Donor-Sheets zu vermeiden.

EP 673 778 B1 offenbart Thermotransfer Empfängerfolien, mit beschichteter, metallisierter Polymeroberfläche als Empfängerfolie. Hierin werden für die Empfänger-Schicht insbesondere Kunststoffe wie PVC, Vinylacetat/Vinylchlorid-Copolymere, Polyvinylidenacetale, PMMA sowie Siliconoberflächen auf Polymerbasis genannt. Schon aufgrund der metallisierten Oberfläche scheiden solche Folien jedoch mit Blick auf die Bildung von Sollbruchstellen in Sicherheits- und/oder Wertdokumenten aus.

Es bestand demnach weiterhin Bedarf, Farb-Empfängerfolien oder -schichten bereit zu stellen, bei denen die Farbintensität des Druckbildes beim Bedrucken mittels Dye Diffusion Thermal Transfer Druck verbessert ist. Insbesondere sollte dieser Effekt erzielt werden, ohne gleichzeitig die Abbildungsschärfe des Druckbildes zu beeinträchtigen.

Der vorliegenden Erfindung lag somit die Aufgabe zugrunde Folien oder Schichten aufzufinden, die mittels Dye Diffusion Thermal Transfer Druck bedruckt werden können, wobei die Farbintensität des Druckbildes verbessert wird. Eine weitere Aufgabe bestand darin, dass bei Einsatz dieser Folien oder Schichten im Dye Diffusion Thermal Transfer Druck die Abbildungsschärfe nicht wesentlich bzw. mit dem bloßen Auge erkennbar beeinträchtigt wird.

Diese Aufgabe wurde überraschend dadurch gelöst, dass als Farb-Akzeptor-Schicht oder Farb-Akzeptor-Folie eine Schicht oder Folie enthaltend eine Polyesterkomponente enthaltend wenigstens ein Poly- oder Copolykondensat der Terephthalsäure oder Naphthalindicarbonsäure verwendet wird, wobei die Polyesterkomponente insgesamt Reste von Cyclohexan-dimethanol-1,4 in einer Menge von 25 bis 75 Mol.-% bezogen auf die Reste der Diolkomponente(n) in allen in der Polyesterkomponente enthaltenen Poly- oder Copolykondensaten der Terephthalsäure oder Naphthalindicarbonsäure enthält. Durch die Verwendung dieser speziellen Polyesterkomponente in den Schichten oder Folien wird überraschend die Farbintensität des Druckbildes deutlich verbessert.

Gegenstand der vorliegenden Erfindung ist demnach ein Schichtaufbau enthaltend
- wenigstens eine Schicht (A) enthaltend wenigstens einen thermoplastischen Kunststoff und
- wenigstens eine Schicht (B) enthaltend eine Polyesterkomponente enthaltend wenigstens ein Poly- oder Copolykondensat der Terephthalsäure oder Naphthalindicarbonsäure,
wobei die Polyesterkomponente Reste von Cyclohexan-dimethanol-1,4 in einer Menge von 25 bis 75 Mol.-% bezogen auf die Reste der Diolkomponente(n) in allen in der Polyesterkomponente enthaltenen Poly- oder Copolyestern enthält, dadurch gekennzeichnet, dass der Kunststoffzusammensetzung für die Herstellung der Schicht(en) (B) wenigstens ein Phosphit zugegeben wird, wobei "Phosphit" ein Ester der Phosphonsäure mit der allgemeinen Struktur P(OR)3 bedeutet, bei dem R für aliphatische, aromatische und/oder cycloaliphatische Kohlenwasserstoffreste steht, wobei die Kohlenwasserstoffreste R gegebenenfalls noch Heteroatome enthalten können und wobei die aromatischen Kohlenwasserstoffreste weitere Substituenten aufweisen können. Die Polyesterkomponente, welche als Reste einer von mehreren Diolkomponenten solche von Cyclohexan-dimethanol-1,4 in einer Menge von 25 bis 75 Mol.-% bezogen auf die Reste der Diolkomponente(n) in allen in der Polyesterkomponente enthaltenen Poly- oder Copolyestern enthält, wird im Folgenden auch kurz als Cyclohexan-dimethanol-1,4 modifizierte Polyesterkomponente bezeichnet.

Die Polyesterkomponente der Schicht (B) enthält erfindungsgemäß wenigstens ein Poly- oder Copolykondensat der Terephthalsäure oder Naphthalindicarbonsäure. Vorzugsweise enthält die Polyesterkomponente ein oder mehrere Poly- oder Copolykondensate der Terephthalsäure oder Naphthalindicarbonsäure sowie gegebenenfalls Poly- oder Copolykondensate, die keine der Terephthalsäure oder Naphthalindicarbonsäure sind. Bevorzugt enthält die Polyesterkomponente jedoch als Polyester ein oder mehrere Poly- oder Copolykondensate der Terephthalsäure oder Naphthalindicarbonsäure und keine Poly- oder Copolykondensate, die keine der Terephthalsäure oder Naphthalindicarbonsäure sind. In bevorzugten Ausführungsformen weist die Polyesterkomponente daher als Poly- oder Copolyester ein oder mehrere Poly- oder Copolykondensate der Terephthalsäure oder Naphthalindicarbonsäure auf. Die Polyesterkomponente enthält Reste von Cyclohexan-dimethanol-1,4 in einer Menge von 25 bis 75 Mol.-% bezogen auf die Reste der Diolkomponente(n) in allen in der Polyesterkomponente enthaltenen Poly- oder Copolykondensaten der Terephthalsäure oder Naphthalindicarbonsäure.

Die Cyclohexan-dimethanol-1,4 modifizierte Polyesterkomponente kann erfindungsgemäß ein oder mehrere Poly- oder Copolykondensate der Terephthalsäure oder Naphthalindicarbonsäure enthalten. Für den Fall, dass die Polyesterkomponente mehrere Poly- oder Copolykondensate der Terephthalsäure oder Naphthalindicarbonsäure enthält, können die Reste der Diolkomponente Cyclohexan-dimethanol-1,4 in einem oder mehreren dieser Poly- oder Copolykondensate der Terephthalsäure oder Naphthalindicarbonsäure in unterschiedlichen Mengen enthalten sein, so dass insgesamt die erfindungsgemäß genannten Gesamtmenge von 25 bis 75 Mol.-% bezogen auf die Reste der Diolkomponente(n) in allen in der Polyesterkomponente enthaltenen Poly- oder Copolyestern, bevorzugt bezogen auf die Reste der Diolkomponente(n) in allen in der Polyesterkomponente enthaltenen Poly- oder Copolykondensaten der Terephthalsäure oder Naphthalindicarbonsäure, erreicht wird.

Geeignete Poly- oder Copolykondensate der Terephthalsäure oder Naphthalindicarbonsäure für die Cyclohexan-dimethanol-1,4 modifizierte Polyesterkomponente sind beispielsweise Poly- oder Copolykondensate der Terephthalsäure oder Naphthalindicarbonsäure, welche Reste von Cyclohexan-dimethanol-1,4 aufweisen wie beispielsweise und bevorzugt Poly- oder Copolyethylenterephthalat (PET oder CoPET), glycol-modifiziertes PET (PETG) oder Poly- oder Copolybutylenterephthalat (PBT oder CoPBT), Poly- oder Copolyethylennaphthalat (PEN oder CoPEN), welche jeweils Reste von Cyclohexan-dimethanol-1,4 aufweisen, oder Mischungen aus den vorangehend genannten. Weiterhin geeignet sind auch Mischungen aus den vorgenannten mit Poly-(cyclohexan-dimethanol-1,4)-terephthalat oder Poly-(cyclohexan-dimethanol-1,4)-naphthalat. Der Cyclohexan-dimethanol-1,4 modifizierten Polyesterkomponente können zudem Poly- oder Copolykondensate der Terephthalsäure oder Naphthalindicarbonsäure beigemischt sein, die keine Reste von Cyclohexan-dimethanol-1,4 enthalten.

Als Poly- oder Copolykondensate der Terephthalsäure oder Naphthalindicarbonsäure eignen sich bevorzugt Poly- oder Copolyalkylenterephthalate oder Poly- oder Copolyalkylennaphthalate. Geeignete Poly- oder Copolyalkylenterephthalate oder Poly- oder Copolyalkylennaphthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen und/oder araliphatischen Diolen, besonders bevorzugt Reaktionsprodukte aus aromatischen Dicarbonsäuren oder ihren reaktionsfähigen Derivaten (z. B. Dimethylestern oder Anhydriden) und aliphatischen und/oder cycloaliphantischen Diolen, und Mischungen dieser Reaktionsprodukte.

Bevorzugte Cyclohexan-dimethanol-1,4-Reste enthaltende Poly- oder Copolykondensate der Terephthalsäure oder Naphthalindicarbonsäure lassen sich aus Terephthalsäure oder Naphthalin-2,6-dicarbonsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Cyclohexan-dimethanol-1,4-Reste enthaltende Poly- oder Copolykondensate der Terephthalsäure oder Naphthalindicarbonsäure enthalten mindestens 80 Mol-%, vorzugsweise 90 Mol-% Reste, die aus der Verwendung von Terephthalsäure oder Naphthalindicarbonsäure, bezogen auf die Dicarbonsäurekomponente, bei der Herstellung resultieren. Ganz besonders bevorzugt enthält die Cyclohexan-dimethanol-1,4 modifizierte Polyesterkomponente insgesamt Reste von Cyclohexan-dimethanol-1,4 in einer Menge von 30 bis 75 Mol.-%, besonders bevorzugt von 40 bis 75 Mol.-%, ganz besonders bevorzugt von 50 bis 75 Mol.-%, bezogen auf die Reste der Diolkomponente(n) in allen in der Polyesterkomponente enthaltenen Poly- oder Copolyestern, bevorzugt bezogen auf die Reste der Diolkomponente(n) in allen in der Polyesterkomponente enthaltenen Poly- oder Copolykondensaten der Terephthalsäure oder Naphthalindicarbonsäure.

Bevorzugte Cyclohexan-dimethanol-1,4-Reste enthaltende Poly- oder Copolykondensate der Terephthalsäure oder Naphthalindicarbonsäure enthalten als Reste von Diolgruppen bevorzugt mindestens 80 Mol-%, vorzugsweise mindestens 90 Mol-% solche Reste die aus der Verwendung von Cyclohexan-dimethanol-1,4 sowie zusätzlich Ethylenglykol, und/oder Butandiol-1,4, bezogen auf die Diolkomponente, bei der Herstellung resultieren.

Die bevorzugten Cyclohexan-dimethanol-1,4-Reste enthaltenden Poly- oder Copolykondensate der Terephthalsäure oder Naphthalindicarbonsäure können neben Terephthalsäureresten oder Naphthalindicarbonsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure (im Falle von Polyalkylenterephthalaten), Terephthalsäure (im Falle von Polyalkylennaphthalaten), 4,4'-Diphenyldicarbonsäure, Bernstein-, Adipin-, Sebacinsäure, Azelainsäure und/oder Cyclohexandiessigsäure.

Die bevorzugten Cyclohexan-dimethanol-1,4-Reste enthaltenden Poly- oder Copolykondensate der Terephthalsäure oder Naphthalindicarbonsäure können neben Resten aus Cyclohexan-dimethanol-1,4 und gegebenenfalls Ethylenglycol und/oder Butandiol-1,4 bis zu 20 Mol-%, bevorzugt bis zu 10 Mol.-% Reste anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzo 1, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-A 24 07 674, 24 07 776, 27 15 932).

Besonders bevorzugte Cyclohexan-dimethanol-1,4-Reste enthaltende Poly- oder Copolykondensate der Terephthalsäure oder Naphthalindicarbonsäure enthalten als Reste von mehreren Diolkomponenten ausschließlich solche von Cyclohexan-dimethanol-1,4 und Ethylenglycol und/oder Butandiol-1,4.

Die Cyclohexan-dimethanol-1,4-Reste enthaltenden Poly- oder Copolykondensate der Terephthalsäure oder Naphthalindicarbonsäure können durch Einbau relativ kleiner Mengen 3- oder 4-wertiger Alkohole oder 3- oder 4-basischer Carbonsäuren, wie sie z. B. in der DE-A 19 00 270 und der US 3,692,744 beschrieben sind, verzweigt werden. Beispiele bevorzugter Verzweigungsmittel sind Trimesinsäure, Trimellitsäure, Trimethylolethan und -propan und Pentaerythrit. Vorzugsweise wird nicht mehr als 1 Mol-% des Verzweigungsmittels, bezogen auf die Säurekomponente, verwendet.

Aus den Cyclohexan-dimethanol-1,4-Reste enthaltenden Poly- oder Copolykondensaten der Terephthalsäure oder Naphthalindicarbonsäure sind die Cyclohexan-dimethanol-1,4-Reste enthaltenden Poly- oder Copolykondensate der Terephthalsäure besonders bevorzugt.

Ganz besonders bevorzugt sind Cyclohexan-dimethanol-1,4-Reste enthaltende Polyalkylenterephthalate, die allein aus Terephthalsäure und deren reaktionsfähigen Derivaten (z. B. deren Dialkylestern) und Cyclohexan-dimethanol-1,4 und Ethylenglycol und/oder Butandiol-1,4 hergestellt worden sind, und Mischungen enthaltend solche Polyalkylenterephthalate.

Erfindungsgemäß können in einer bevorzugten Ausführungsform der Erfindung ein oder mehrere vorangehend genannte Copolyester enthaltend Cyclohexan-dimethanol-1,4-Reste sowie weitere Diol- und/oder Polyolreste als Polyesterkomponente in Schicht (B) eingesetzt werden. Erfindungsgemäß können in einer weiteren bevorzugten Ausführungsform der Erfindung als Polyesterkomponente auch Gemische aus einem oder mehreren der vorangehend genannten Copolyester enthaltend Cyclohexan-dimethanol-1,4-Reste sowie weitere Diol- und/oder Polyolreste mit Poly(cyclohexan-dimethanol-1,4)terephthalat oder Poly(cyclohexan-dimethanol-1,4)naphthalat eingesetzt werden. In beiden vorgenannten bevorzugten Ausführungsformen können jeweils auch weitere Poly- oder Copolykondensat(e) der Terephthalsäure oder Naphthalindicarbonsäure beigefügt sein, welche keine Cyclohexan-dimethanol-1,4-Reste aufweisen, wobei dann das Gesamtgemisch die Polyesterkomponente bildet.

Besonders bevorzugte Cyclohexan-dimethanol-1,4-Reste enthaltende Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/cyclohexan-dimethanol-1,4)-terephthalate. Solche Copolyester können in bevorzugten Ausführungsformen im Gemisch mit Poly-(cyclohexan-dimethanol-1,4)-terephthalat eingesetzt werden.

Die Cyclohexan-dimethanol-1,4-Reste enthaltenden Poly- oder Copolykondensate der Terephthalsäure oder Naphthalindicarbonsäure besitzen bevorzugt eine intrinsische Viskosität von ca. 0,4 bis 1,5 dl/g, vorzugsweise von 0,5 bis 1,3 dl/g, jeweils gemessen in Phenol/Tetrachlorethan (1:1 Gew.-Teile) bei 25°C.

Es ist auch möglich dass Schicht (B) und damit auch die Kunststoffzusammensetzung zu deren Herstellung zusätzlich zu der Polyesterkomponente einen oder mehrere weitere(n) thermoplastische(n) Kunststoff(e) enthält. Als solche thermoplastischen Kunststoffe kommen die im Folgenden für die Schicht (A) genannten in Frage. Die Kunststoffzusammensetzung der Schicht (B) enthält bevorzugt mindestens 50 Gew.-%, besonders bevorzugt mindestens 60 Gew.-%, ganz besonders bevorzugt mindestens 70 Gew.-% der Polyesterkomponente, bezogen auf das Gesamtgewicht der Kunststoffzusammensetzung der Schicht (B).

In bevorzugten Ausführungsformen der Erfindung kann die Schicht (B) als weiteren thermoplastischen Kunststoff wenigstens ein Polycarbonat oder Copolycarbonat auf Basis von Diphenolen enthalten. Als solche Polycarbonate oder Copolycarbonate auf Basis von Diphenolen kommen beispielsweise und bevorzugt die im Folgenden für die Schicht (A) genannten in Frage. Vorzugsweise sind in der Kunststoffzusammensetzung für die Schicht (B) 30 Gew.-% oder weniger, besonders bevorzugt von 0,1 bis 25 Gew.-%, ganz besonders bevorzugt von 0,5 bis 20 Gew.-% Polycarbonat(e) oder Copolycarbonat(e) auf Basis von Diphenolen enthalten.

Durch den Zusatz von Polycarbonat(en) oder Copolycarbonat(en) auf Basis von Diphenolen kann die Erweichungstemperatur der Schicht (B) erhöht werden. Des Weiteren kann ein solcher Zusatz von Polycarbonat(en) oder Copolycarbonat(en) auf Basis von Diphenolen eine bessere Haftung der Schicht (B) zu benachbarten Schichten enthaltend Polycarbonat(e) oder Copolycarbonat(e) auf Basis von Diphenolen in Sicherheits- und/oder Wertdokumenten bewirken, was ein nachträgliches Auftrennen der Dokumente zusätzlich erschwert und deren Fälschungssicherheit erhöht.

In weiteren bevorzugten Ausführungsformen kann die Schicht (B) wenigstens ein lasersensibles Additiv enthalten.

Als lasersensible Additive kommen beispielsweise sogenannte Laser-Markier-Additive in Frage, d.h. solche aus einem Absorber im Wellenlängenbereich des zu verwendenden Lasers, bevorzugt im Wellenlängenbereich von ND:YAG-Lasern (Neodym-dotierte Yttrium-Aluminium-Garnet-Laser). Solche Laser-Markier-Additive und deren Verwendung in Formmassen sind beispielsweise in WO-A 2004/50766 und WO-A 2004/50767 beschrieben und werden von der Fa. DSM unter dem Markennamen Micabs® kommerziell angeboten. Weiterhin als lasersensible Additive geeignete Absorber sind Ruß, beschichtete Schichtsilikate wie z.B. in DE-A-195 22 397 beschrieben und unter den Markennamen Lazerflair® kommerziell erhältlich, antimondotiertes Zinnoxid wie z.B. in US 6,693,657 beschrieben und unter den Markennamen Mark-itTM kommerziell erhältlich sowie phosphorhaltige Zinn-Kupfer-Mischoxide wie z.B. in WO-A 2006/042714 beschrieben. Bevorzugt ist es, wenn die Korngröße des lasersensiblen Additivs im Bereich von 100 nm bis 10 µm liegt, und besonders vorteilhaft, wenn sie im Bereich von 500 nm bis 2 µm liegt. Ein ganz besonders bevorzugtes lasersensibles Additiv ist Ruß.

Der Kunststoffzusammensetzung zur Herstellung der Schicht (B) wird wenigstens ein Phosphit zugegeben.

Unter Phosphiten im Sinne der vorliegenden Erfindung sollen Ester der Phosphonsäure (oft auch als Phosphorigsäureester bezeichnet) mit der allgemeinen Struktur P(OR)₃ verstanden sein, wobei R für aliphatische, aromatische und/oder cycloaliphatische Kohlenwasserstoffreste, bevorzugt für aliphatische und/oder cycloaliphatische Kohlenwasserstoffreste steht, wobei die Kohlenwasserstoffreste R gegebenenfalls noch Heteroatome, wie z.B. Sauerstoff oder Stickstoff, enthalten können und wobei die aromatischen Kohlenwasserstoffreste weitere Substituenten wie zum Beispiel Alkylgruppen aufweisen können.

Bevorzugte Phosphite im Rahmen der Erfindung sind solche, die wenigstens eine Oxetangruppe enthalten. Solche oxetangruppenhaltigen Phosphite können eine, zwei oder drei Oxetangruppen enthalten. Es können auch Mischungen aus mehreren oxetangruppenhaltigen Phosphiten eingesetzt werden. Oxetangruppenhaltige Phosphite können in dem Fachmann bekannter Weise beispielsweise durch Umesterung von oxetangruppenhaltigen Alkoholen oder Phenolen - gegebenenfalls in Mischung mit oxetangruppenfreien Alkoholen oder Phenolen - mit Trialkyl- oder Triarylphosphiten oder durch Umsetzung von Phosphortrichlorid mit den entsprechenden oxetangruppenhaltigen Alkoholen oder Phenolen - gegebenenfalls in Mischung mit oxetangruppenfreien Alkoholen oder Phenolen - in Gegenwart säurebindender Mittel hergestellt werden (vgl. z.B. US 3 209 013).

Beispiele für oxetangruppenhaltige Alkohole oder Phenole sind 3-Ethyl-3-hydroxymethyloxetan, 3-Methyl-3-hydroxymethyloxetan, 3-Pentyl-3-hydroxymethyloxetan, 3-Hexadecyl-3-hydroxymethyloxetan, 3-Phenyl-3-hydroxymethyloxetan, 3-p-Tolyl-3-hydroxymethyloxetan, 3-Benzyl-3-hydroxymethyloxetan, 3-Chlormethyl-3-hydroxymethyloxetan, 3-Brommethyl-3-hydroxymethyloxetan, 3-Fluormethyl-3-hydroxymethyloxetan, 3-Cyanomethyl-3-hydroxymethyloxetan, 3-Methoxymethyl-3-hydroxymethyloxetan, 3-Ethoxymethyl-3-hydroxymethyloxetan, 3-Butoxymethyl-3-hydroxymethyloxetan, 3-Octadecyloxymethyl-3-hydroxymethyloxetan, 3-Phenyloxy-3-hydroxymethyloxetan, 3-p-Tolyloxy-3-hydroxymethyloxetan, 3-Benuyloxy-3-hydroxymethyloxetan, 3-Acetyloxy-3-hydroxymethyloxetan, 3-Oleyloxy-3-hydroxymethyloxetan, 3-Stearyloxy-3-hydroxymethyloxetan, 3-Ethyl-3-hydroxyoxetan, 3-Methyl-3-hydroxyoxetan, 3,3-Bis-hydroxymethyloxetan und p-(3-Ethyloxetanyl-3-oxymethyl)-phenol.

Besonders bevorzugte Beispiele für oxetangruppenhaltige Alkohole oder Phenole sind 3-Ethyl-3-hydroxymethyloxetan, 3-Pentyl-3-hydroxymethyloxetan, 3,3-Bis-hydroxymethyloxetan und p-(3-Ethyloxetanyl-3-oxymethyl)-phenol.

Beispiele für oxetangruppenfreie Alkohole oder Phenole sind Decylalkohol, Staerylalkohol, Benzylalkohol, Glycol, Trimethylolpropan, Pentaerythrit, Sorbit, Neopentylglycol, Dimethylolcyclohexan, Diethylenglycol, Thiodiglycol, Phenol, p-Chlorphenol, p-Nonylohenol, Brenzcatechin, Di-t-bytylbrenzcatechin und 2,2-Bis-(4-hydroxyphenyl)-propan.

Beispiele für oxetangruppenhaltige Phosphite sind Tris-[(3-ethyloxetanyl-3)-methyl]-phosphit, Bis-[(3-ethyloxetanyl-3)-methyl]-phosphite, Mono-[(3-ethyloxetanyl-3)-methyl]-phosphite, Tris-[(3-pentyloxetanyl-3)-methyl]-phosphit, Bis-[(3-pentyloxetanyl-3)-methyl]-phosphit, Tris-[(3-hexadecyloxetanyl-3)-methyl]-phosphit, Bis-[(3-hexadecyloxetanyl-3)-methyl]-phosphit, Tris-[(3-phenyloxetanyl-3)-methyl]-phosphit, Bis-[(3-phenyloxetanyl-3)-methyl]-phosphit, Tris-[(3-p-tolyloxetanyl-3)-methyl]-phosphit, Bis-[(3-p-tolyloxetanyl-3)-methyl]-phosphit, Tris-[(3-benzyloxetanyl-3)-methyl]-phosphit, Bis-[(3-benzyloxetanyl-3)-methyl]-phosphit, Phenyl-bis-[(3-ethyloxetanyl-3)-methyl]-phosphit, 2-Phenoxy-spiro(1,3,2-dioxaphosphorinan-5,3 '-oxetan), 3,3-Bis-[spiro(oxetan-3',5"-(1",3",2"-dioxaphosphorinan-2"))-oxy-methyl]-oxetan und P,P'-[(1-methylethyliden)di-4,1-phenylen]-P,P,P',P'-tetrakis[(3-ethyl-3-oxetanyl)-methyl]-phosphit. Weitere geeignete Beispiele sind in US 3,209,013 offenbart.

Besonders bevorzugte oxetangruppenhaltige Phosphite sind Tris-[(3-ethyloxetanyl-3)-methyl]-phosphit, Bis-[(3-ethyloxetanyl-3)-methyl]-phosphite, Mono-[(3-ethyloxetanyl-3)-methyl]-phosphite, Tris-[(3-pentyloxetanyl-3)-methyl]-phosphit, Bis-[(3-pentyloxetanyl-3)-methyl]-phosphit, Phenyl-bis-[(3-ethyloxetanyl-3)-methyl]-phosphit, 2-Phenoxy-spiro(1,3,2-dioxaphosphorinan-5,3'-oxetan), 3,3-Bis-[spiro(oxetan-3',5 "-(1",3 ",2 "-dioxaphosphorinan-2 "))-oxy-methyl]-oxetan und P,P'-[(1-methylethyliden)di-4,1-phenylen]-P,P,P',P'-tetrakis[(3-ethyl-3-oxetanyl)-methyl]-phosphit.

Ganz besonders bevorzugte oxetangruppenhaltige Phosphite sind Tris-[(3-ethyloxetanyl-3)-methyl]-phosphit, Bis-[(3-ethyloxetanyl-3)-methyl]-phosphit oder Mono-[(3-ethyloxetanyl-3)-methyl]-phosphit, sowie Mischungen enthaltend diese oder Mischungen aus diesen.

In besonders bevorzugten Ausführungsformen der Erfindung ist wenigstens Tris-[(3-ethyloxetanyl-3)-methyl]-phosphit als Phosphit in der Kunststoffzusammensetzung für die Herstellung der Schicht (B) enthalten.

Die vorangehend genannten oxetangruppenhaltigen Phosphite sind dem Fachmann bekannt und in der Literatur als Stabilisatoren für halogenierte Polymere (vgl.US 3,209,013) oder Polycarbonate (vgl. DE-A 2 140 207) beschrieben. Deren überraschender Einfluss auf die Farbintensität von Dye Diffusion Thermal Transfer Druckbildern auf speziellen Polyesterschichten ist aber bisher in der Literatur nicht beschrieben.

Die Phosphite sind in der Kunststoffzusammensetzung für die Schicht (B) bevorzugt in einer Menge von 0,005 bis 2 Gew.-%, besonders bevorzugt von 0,01 bis 1 Gew.-%, ganz besonders bevorzugt von 0,05 bis 0,5 Gew.-% - bezogen auf das Gesamtgewicht der Kunststoffzusammensetzung für die Schicht (B) - enthalten.

Die der Kunststoffzusammensetzung zugegebenen Phosphite können während der Verarbeitung der Kunststoffzusammensetzung zur Schicht (B) oder auch nachträglich in der fertigen Schicht (B) wenigstens zum Teil hydrolysieren oder oxidiert werden, d.h im Falle der Oxidation findet ein Übergang von der Oxidationsstufe +III des Phosphors in die Oxidationsstufe +V statt.

In weiteren bevorzugten Ausführungsformen kann die Schicht (B) bevorzugt wenigstens einen blauen oder violetten Farbstoff enthalten. Ein solcher Farbstoff ist besonders bevorzugt in einer Menge von 0,1 bis 100 ppm, besonders bevorzugt von 0,5 bis 50 ppm, ganz besonders bevorzugt 1,0 bis 30 ppm, bezogen auf das Gesamtgewicht der Kunststoffzusammensetzung für die Schicht (B), enthalten.

Als geeignete blaue oder violette Farbstoffe kommen alle dem Fachmann bekannten blauen oder violetten Farbstoffe in Frage, die sich in Kunststoffzusammensetzungen einarbeiten lassen und die Verarbeitungstemperaturen, beispielsweise beim Extrudieren, überstehen. Bevorzugt kommen blaue oder violette Anthrachinon-Farbstoffe, beispielsweise solche der Makrolex®-Reihe in Frage. Beispielhaft seien dazu Makrolex® Violet 3R (Solvent Violett 36) oder 1,4-Bis-[(2,6-diethyl-4-methylphenyl)-amino]-9,10-anthracendion (Macrolex® Blue RR), in Frage.

Als thermoplastische Kunststoffe für die Schicht (A) kommen unabhängig voneinander thermoplastische Kunststoffe ausgewählt aus Polymerisaten von ethylenisch ungesättigten Monomeren und/oder Polykondensaten von bifunktionellen reaktiven Verbindungen in Frage. Für bestimmte Anwendungen kann es vorteilhaft sein, einen transparenten thermoplastischen Kunststoff einzusetzen. In besonders bevorzugten Ausführungsformen können die genannten Kunststoffschichten wenigstens einen thermoplastischen Kunststoff ausgewählt aus den vorangehend genannten Gruppen übereinstimmend aufweisen.

Besonders geeignete thermoplastische Kunststoffe sind Polycarbonate oder Copolycarbonate auf Basis von Diphenolen, Poly- oder Copolyacrylate und Poly- oder Copolymethacrylate wie beispielhaft und vorzugsweise Polymethylmethacrylat, Poly- oder Copolymere mit Styrol wie beispielhaft und vorzugsweise transparentes Polystyrol oder Polystyrolacrylnitril (SAN), transparente thermoplastische Polyurethane, sowie Polyolefine, wie beispielhaft und vorzugsweise transparente Polypropylentypen oder Polyolefine auf der Basis von cyclischen Olefinen (z.B. TOPAS®, Hoechst) oder Polyolefin basierte Materialien wie z.B. Teslin®, Poly- oder Copolykondensate der Terephthalsäure oder Naphthalindicarbonsäure, wie beispielhaft und vorzugsweise Poly- oder Copolyethylenterephthalat (PET oder CoPET), glycol-modifiziertes PET (PETG) oder Poly- oder Copolybutylenterephthalat (PBT oder CoPBT), Poly- oder Copolyethylennaphthalat (PEN oder CoPEN) oder Mischungen aus den vorangehend genannten.

Ganz besonders bevorzugt sind Polycarbonate oder Copolycarbonate, insbesondere mit mittleren Molekulargewichten M_{W} von 500 bis 100 000, bevorzugt von 10 000 bis 80 000, besonders bevorzugt von 15 000 bis 40 000 oder Blends enthaltend wenigstens ein solches Polycarbonat oder Copolycarbonat. Weiterhin bevorzugt sind auch Blends der vorgenannten Polycarbonate oder Copolycarbonate mit wenigstens einem Poly- oder Copolykondensat der Terephthalsäure, insbesondere wenigstens einem solchen Poly- oder Copolykondensat der Terephthalsäure mit mittleren Molekulargewichten M_{W} von 10.000 bis 200.000, bevorzugt von 26.000 bis 120.000. In besonders bevorzugten Ausführungsformen der Erfindung handelt es sich bei dem Blend um einen Blend aus Polycarbonat oder Copolycarbonat mit Poly- oder Copolybutylenterephthalat. Bei einem solchen Blend aus Polycarbonat oder Copolycarbonat mit Poly- oder Copolybutylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat, vorzugsweise mit 1 bis 90 Gew.-% Polycarbonat und 99 bis 10 Gew.-% Polybutylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat um einen solchen mit 20 bis 85 Gew.-% Polycarbonat oder Copolycarbonat und 80 bis 15 Gew.-% Poly- oder Copolybutylenterephthalat, vorzugsweise mit 20 bis 85 Gew.-% Polycarbonat und 80 bis 15 Gew.-% Polybutylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat um einen solchen mit 35 bis 80 Gew.-% Polycarbonat oder Copolycarbonat und 65 bis 20 Gew.-% Poly- oder Copolybutylenterephthalat, vorzugsweise mit 35 bis 80 Gew.-% Polycarbonat und 65 bis 20 Gew.-% Polybutylenterephthalat handeln, wobei sich die Anteile zu 100 Gew.-% addieren.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern mittels Lösungs- bzw. Phasengrenzflächenkondensation oder Schmelzekondensation erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl, 2,2-Bis-(4-hydroxyphenyl)-propan und 1,1-Bis-(4-hydroxyphenyl)-3,3,5-trimethyl-cyclohexan.

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan hergestellt werden.

Geeignete Kohlensäurederivate können beispielsweise für die Herstellung mittels Lösungskondensation, insbesondere Phasengrenzflächenkondensation, Phosgen oder für die Herstellung mittels Schmelzekondensation Diarylcarbonate der allgemeinen Formel (II) sein, 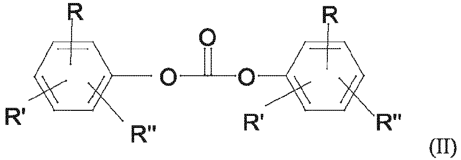 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R''' bedeuten kann, wobei R''' für Wasserstoff, lineares oder verzweigtes C₁-C₃₄-Alkyl, C₇-C₃₄-Alkylaryl oder C₆-C₃₄-Aryl steht.

Besonders bevorzugte Diarylverbindungen sind Diphenylcarbonat, 4-tert-Butylphenyl-phenylcarbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 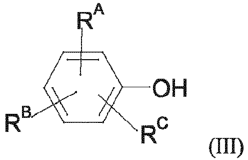 wobei
- R^{A}: für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
- R^{B}, R^{C}: unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Als Poly- oder Copolykondensate der Terephthalsäure oder Naphthalindicarbonsäure für die Schicht (A) eignen sich beispielsweise und bevorzugt Poly- oder Copolyethylenterephthalat (PET oder CoPET), glycol-modifiziertes PET (PETG) oder Poly- oder Copolybutylenterephthalat (PBT oder CoPBT), Poly- oder Copolyethylennaphthalat (PEN oder CoPEN) oder Mischungen aus den vorangehend genannten.

Bei den Poly- oder Copolykondensate der Terephthalsäure oder Naphthalindicarbonsäure für die Schicht (A) kann es sich um die weiter vorne bereits genannten Cyclohexan-dimethanol-1,4 Reste enthaltenden Poly- oder Copolykondensat(e) der Terephthalsäure oder Naphthalindicarbonsäure oder aber um Poly- oder Copolykondensat(en) der Terephthalsäure oder Naphthalindicarbonsäure, welche keine Reste von Cyclohexan-dimethanol-1,4 oder diese außerhalb der genannten Stoffmengenbereiche enthalten, handeln. Es kommen auch Mischungen aus diesen in Frage.

Als Poly- oder Copolykondensate der Terephthalsäure oder Naphthalindicarbonsäure eignen sich in bevorzugten Ausführungsformen der Erfindung Polyalkylenterephthalate oder Polyalkylennaphthalate. Geeignete Polyalkylenterephthalate oder Polyalkylennaphthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Poly- oder Copolykondensate der Terephthalsäure oder Naphthalindicarbonsäure lassen sich aus Terephthalsäure oder Naphthalin-2,6-dicarbonsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Poly- oder Copolykondensate der Terephthalsäure oder Naphthalindicarbonsäure enthalten mindestens 80 Mol-%, vorzugsweise 90 Mol-% Reste, die aus der Verwendung von Terephthalsäure oder Naphthalindicarbonsäure, bezogen auf die Dicarbonsäurekomponente, bei der Herstellung resultieren und mindestens 80 Mol-%, vorzugsweise mindestens 90 Mol-% Reste die aus der Verwendung von Ethylenglykol, Cyclohexan-dimethanol-1,4 und/oder Butandiol-1,4, bezogen auf die Diolkomponente, bei der Herstellung resultieren.

Die bevorzugten Poly- oder Copolykondensate der Terephthalsäure oder Naphthalindicarbonsäure können neben Terephthalsäureresten oder Naphthalindicarbonsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure (im Falle von Polyalkylenterephthalaten), Terephthalsäure (im Falle von Polyalkylennaphthalaten), 4,4'-Diphenyldicarbonsäure, Bernstein-, Adipin-, Sebacinsäure, Azelainsäure und/oder Cyclohexandiessigsäure.

Die bevorzugten Poly- oder Copolykondensate der Terephthalsäure oder Naphthalindicarbonsäure können neben Resten aus Ethylenglycol, Butandiol-1,4 und/oder Cyclohexan-dimethanol-1,4 bis zu 20 Mol-% Reste anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-A 24 07 674, 24 07 776, 27 15 932).

Besonders bevorzugte Poly- oder Copolykondensate der Terephthalsäure oder Naphthalindicarbonsäure enthalten als Reste einer von mehreren Diolkomponenten solche von Cyclohexan-dimethanol-1,4. Derartige Reste von Cyclohexan-dimethanol-1,4 sind in den besonders bevorzugten Polyalkylenterephthalaten oder Polyalkylennaphthalaten vorzugsweise zu einem Anteil von mindestens 15 Mol-%, besonders bevorzugt von mindestens 20 Mol-%, ganz besonders bevorzugt von mindestens 30 Mol-%, bezogen auf die Diolkomponente, enthalten. Vorzugsweise sind derartige Reste von Cyclohexan-dimethanol-1,4 in den besonders bevorzugten Polyalkylenterephthalaten oder Polyalkylennaphthalaten zu einem Anteil von höchstens 95 Mol-%, besonders bevorzugt von höchstens 90 Mol-%, ganz besonders bevorzugt von höchstens 80 Mol-%, bezogen auf die Diolkomponente, enthalten. Weiterhin vorzugsweise sind derartige Reste von Cyclohexan-dimethanol-1,4 in den besonders bevorzugten Polyalkylenterephthalaten oder Polyalkylennaphthalaten zu einem Anteil von 15 bis 95 Mol-%, besonders bevorzugt von 20 bis 90 Mol%, ganz besonders bevorzugt von 30 bis 80 Mol-%, bezogen auf die Diolkomponente, enthalten.

Die Poly- oder Copolykondensate der Terephthalsäure oder Naphthalindicarbonsäure können durch Einbau relativ kleiner Mengen 3- oder 4-wertiger Alkohole oder 3- oder 4-basischer Carbonsäuren, wie sie z. B. in der DE-A 19 00 270 und der US 3,692,744 beschrieben sind, verzweigt werden. Beispiele bevorzugter Verzweigungsmittel sind Trimesinsäure, Trimellitsäure, Trimethylolethan und - propan und Pentaerythrit. Vorzugsweise wird nicht mehr als 1 Mol-% des Verzweigungsmittels, bezogen auf die Säurekomponente, verwendet.

Ganz besonders bevorzugt sind Polyalkylenterephthalate, die allein aus Terephthalsäure und deren reaktionsfähigen Derivaten (z. B. deren Dialkylestern) und Ethylenglykol, Cyclohexan-dimethanol-1,4 und/oder Butandiol-1,4 hergestellt worden sind, und Mischungen enthaltend solche Polyalkylenterephthalate oder Polyalkylennaphthalate die allein aus Naphthalindicarbonsäure und deren reaktionsfähigen Derivaten (z. B. deren Dialkylestern) und Ethylenglykol, Cyclohexan-dimethanol-1,4 und/oder Butandiol-1,4 hergestellt worden sind.

Aus den Poly- oder Copolykondensate der Terephthalsäure oder Naphthalindicarbonsäure sind die Poly- oder Copolykondensate der Terephthalsäure besonders bevorzugt.

Besonders bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/ Cyclohexan-dimethanol-1,4)-terephthalate.

Die Poly- oder Copolykondensate der Terephthalsäure oder Naphthalindicarbonsäure besitzen bevorzugt eine intrinsische Viskosität von ca. 0,4 bis 1,5 dl/g, vorzugsweise von 0,5 bis 1,3 dl/g, jeweils gemessen in Phenol/Tetrachlorethan (1:1 Gew.-Teile) bei 25°C.

Bei Schicht (A) kann es sich bevorzugt um eine weiße oder transluzente Schicht handeln.

Bei einer weißen oder transluzenten Schicht (A) handelt es sich bevorzugt um eine mit Pigmenten weiß eingefärbte oder mit Füllstoffen gefüllte Schicht. Solche weiß eingefärbten oder mit Füllstoffen gefüllten Schichten, bevorzugt Kunststoffschichten enthalten bevorzugt Titandioxid, Zirkoniumdioxid, Bariumsulfat oder Glasfasern als Pigmente und/oder Füllstoffe. Die genannten Pigmente oder Füllstoffe werden vorzugsweise in Mengen von 2 bis 60 Gew.-%, besonders bevorzugt von 10 bis 40 Gew.-%, bezogen auf das Gesamtgewicht Pigment oder Füllstoff und Kunststoffmaterial, den Kunststoffen vor der Formgebung zur Schicht (A), welche zum Beispiel durch Extrusion oder Coextrusion erfolgen kann, zugegeben. Bei einer weißen oder transluzenten Schicht (A) kann es sich auch um eine Schicht aus Teslin® handeln.

In bevorzugten Ausführungsformen der Erfindung enthält der erfindungsgemäße Schichtaufbau wenigstens zwei Schichten (B), wobei sich die oder wenigstens eine Schicht (A) zwischen zwei Schichten (B) befindet.

Der erfindungsgemäße Schichtaufbau kann zwischen der Schicht (A) und der oder den Schichten (B) eine oder mehrere weitere Schicht(en) enthaltend wenigstens einen thermoplastischen Kunststoff aufweisen. Dabei kann es sich um transluzente oder weiße Schichten, um transparente Schichten oder um farbige Schichten handeln.

Unter transluzenten Schichten im Sinne dieser Erfindung werden solche Schichten mit einer Transmission im sichtbaren Wellenlängenbereich von 380 nm bis 780 nm von kleiner 50%, bevorzugt von kleiner 35 %, besonders bevorzugt von kleiner 25 %, in ganz besonders bevorzugten Ausführungsformen von kleiner als 15 % verstanden.

Unter transparenten Schichten im Sinne dieser Erfindung werden solche Schichten mit einer Transmission im sichtbaren Wellenlängenbereich von 380 nm bis 780 nm von größer 50%, bevorzugt von größer 65 %, besonders bevorzugt von größer 75 %, in ganz besonders bevorzugten Ausführungsformen von größer als 85 % verstanden.

Schicht (A) und/oder eine der weiteren Schichten enthaltend wenigstens einen thermoplastischen Kunststoff können wenigstens ein lasersensibles Additiv enthalten. Geeignete lasersensible Additive sind beispielsweise die für die Schicht (B) bereits genannten.

In bevorzugten Ausführungsformen enthält die Schicht (A) als thermoplastischen Kunststoff wenigstens ein Polycarbonat oder Copolycarbonat und die Polyesterkomponente der Schicht(en) (B) wenigstens ein Cyclohexan-dimethanol-1,4-Einheiten enthaltendes Poly- oder Copolykondensat der Terephthalsäure oder Naphthalindicarbonsäure, bevorzugt wenigstens ein Cyclohexan-dimethanol-1,4-Einheiten enthaltendes Poly- oder Copolykondensat der Terephthalsäure, ganz besonders bevorzugt wenigstens ein Cyclohexan-dimethanol-1,4-Einheiten enthaltendes und glycol-modifiziertes Poly- oder Copolykondensat der Terephthalsäure (PETG). Besonders bevorzugt enthält die Schicht (B) in diesen bevorzugten Ausführungsformen der Erfindung in der oder wenigstens einer Schicht (B) ein lasersensibles Additiv. Besonders bevorzugt handelt es sich bei der Schicht (A) und der oder den Schicht(en) (B) in diesen bevorzugten Ausführungsformen der Erfindung um transparente Schichten.

In weiteren bevorzugten Ausführungsformen enthält die Schicht (A) als thermoplastischen Kunststoff wenigstens ein Polycarbonat oder Copolycarbonat, wobei die Schicht (A) mit Pigmenten weiß eingefärbt oder mit Füllstoffen gefüllt ist, d.h. weiß oder transluzent ist, und die Polyesterkomponente der Schicht(en) (B) wenigstens ein Cyclohexan-dimethanol-1,4-Einheiten enthaltendes Poly- oder Copolykondensat der Terephthalsäure oder Naphthalindicarbonsäure, bevorzugt wenigstens ein Cyclohexan-dimethanol-1,4-Einheiten enthaltendes Poly- oder Copolykondensat der Terephthalsäure, ganz besonders bevorzugt wenigstens ein Cyclohexan-dimethanol-1,4-Einheiten enthaltendes und glycol-modifiziertes Poly- oder Copolykondensat der Terephthalsäure (PETG). Besonders bevorzugt enthält die Schicht (B) in diesen bevorzugten Ausführungsformen der Erfindung in der oder wenigstens einer Schicht (B) ein lasersensibles Additiv. Besonders bevorzugt handelt es sich bei der oder den Schicht(en) (B) in diesen bevorzugten Ausführungsformen der Erfindung um transparente Schichten.

In bevorzugten Ausführungsformen enthält die Schicht (A) als thermoplastischen Kunststoff wenigstens ein Poly- oder Copolykondensat der Terephthalsäure oder Naphthalindicarbonsäure, bevorzugt wenigstens ein Poly- oder Copolykondensat der Terephthalsäure, ganz besonders bevorzugt wenigstens ein glycol-modifiziertes Poly- oder Copolykondensat der Terephthalsäure (PETG), und die Polyesterkomponente der Schicht(en) (B) enthält wenigstens ein Cyclohexan-dimethanol-1,4-Einheiten enthaltendes Poly- oder Copolykondensat der Terephthalsäure oder Naphthalindicarbonsäure, bevorzugt wenigstens ein Cyclohexan-dimethanol-1,4-Einheiten enthaltendes Poly- oder Copolykondensat der Terephthalsäure, ganz besonders bevorzugt wenigstens ein Cyclohexan-dimethanol-1,4-Einheiten enthaltendes und glycol-modifiziertes Poly- oder Copolykondensat der Terephthalsäure (PETG). Besonders bevorzugt enthält die oder wenigstens eine Schicht (B) in diesen bevorzugten Ausführungsformen der Erfindung ein lasersensibles Additiv. Besonders bevorzugt handelt es sich bei der Schicht (A) und der oder den Schicht(en) (B) in diesen bevorzugten Ausführungsformen der Erfindung um transparente Schichten.

In weiteren bevorzugten Ausführungsformen enthält die Schicht (A) als thermoplastischen Kunststoff wenigstens ein Poly- oder Copolykondensat der Terephthalsäure oder Naphthalindicarbonsäure, bevorzugt ein Poly- oder Copolykondensat der Terephthalsäure, ganz besonders bevorzugt ein glycol-modifiziertes Poly- oder Copolykondensat der Terephthalsäure (PETG), wobei die Schicht (A) mit Pigmenten weiß eingefärbt oder mit Füllstoffen gefüllt ist, d.h. weiß oder transluzent ist, und die Polyesterkomponente der Schicht(en) (B) enthält wenigstens ein Cyclohexan-dimethanol-1,4-Einheiten enthaltendes Poly- oder Copolykondensat der Terephthalsäure oder Naphthalindicarbonsäure, bevorzugt wenigstens ein Cyclohexan-dimethanol-1,4-Einheiten enthaltendes Poly- oder Copolykondensat der Terephthalsäure, ganz besonders bevorzugt wenigstens ein Cyclohexan-dimethanol-1,4-Einheiten enthaltendes und glycol-modifiziertes Poly- oder Copolykondensat der Terephthalsäure (PETG). Besonders bevorzugt enthält die oder wenigstens eine Schicht (B) in diesen bevorzugten Ausführungsformen der Erfindung ein lasersensibles Additiv. Besonders bevorzugt handelt es sich bei der oder den Schicht(en) (B) in diesen bevorzugten Ausführungsformen der Erfindung um transparente Schichten.

Die Schicht(en) (A) in den vorangehend genannten bevorzugten Ausführungsformen können als thermoplastischen Kunststoff auch einen Blend aus wenigstens einem Poly- oder Copolykondensat der Terephthalsäure oder Naphthalindicarbonsäure und wenigstens einem Polycarbonat oder Copolycarbonat enthalten. Bevorzugt handelt es sich dabei um einen Blend aus Polycarbonat oder Copolycarbonat mit Poly- oder Copolybutylenterephthalat.

Den Kunststoffzusammensetzungen für die Herstellung der Schicht(en) (B) in den vorangehend genannten bevorzugten Ausführungsformen wird zudem wenigstens ein Phosphit zugegeben.

Die Schicht(en) (B) in den vorangehend genannten bevorzugten Ausführungsformen können bevorzugt zudem wenigstens ein Polycarbonat oder Copolycarbonat enthalten.

Die erfindungsgemäß vorhandenen Schichten, Schicht (A), Schicht (B) sowie weitere Schichten enthaltend wenigstens einen thermoplastischen Kunststoff, weisen bevorzugt jeweils eine Dicke von 20 µm bis 850 µm, besonders bevorzugt jeweils eine Dicke von 25 µm bis 700 µm, ganz besonders bevorzugt jeweils eine Dicke von 30 µm bis 500 µm auf. Dabei können mehrere Schichten gleiche oder alle Schichten unterschiedliche Schichtdicken aufweisen. Bevorzugt weist bzw. weisen die Schicht(en) (B) eine Schickdicke von 10 µm bis 300 µm, besonders bevorzugt jeweils eine Dicke von 12,5 µm bis 200 µm, ganz besonders bevorzugt von 15 µm bis 150 µm auf. Bevorzugt weist die Schicht (A) eine Schickdicke von 20 µm bis 750 µm, besonders bevorzugt jeweils eine Dicke von 50 µm bis 700 µm, ganz besonders bevorzugt von 75 µm bis 650 µm auf.

Der erfindungsgemäße Schichtaufbau kann derart hergestellt werden, dass verschiedene Kunststofffolien mittels Lamination miteinander verbunden oder der Schichtaufbau mittels Co-extrusion hergestellt.

Bei dem erfindungsgemäßen Schichtaufbau - bevorzugt im Falle der Herstellung durch Co-Extrusion - kann es sich auch um eine Kunststofffolie handeln.

Gegenstand der vorliegenden Erfindung ist daher auch ein Verfahren zur Herstellung eines Schichtaufbaus, bei dem verschiedene Kunststofffolien mittels Lamination miteinander verbunden oder der Schichtaufbau mittels Co-extrusion hergestellt wird.

Im Falle der Lamination werden die einzelnen Folien, z.B. wenigstens eine Kunststofffolie für die Schicht (B) und eine Kunststofffolie für die Schicht (A) sowie gegebenenfalls weitere Kunststofffolien für weitere Schichten in der gewünschten Reihenfolge aufeinandergelegt und mittels Lamination miteinander verbunden. Die Verfahren der Lamination und der Co-Extrusion können im erfindungsgemäßen Verfahren auch kombiniert werden, indem einzelne Folien für die Lamination bereits mehrere Schichten hergestellt durch Co-Extrusion aufweisen.

Insbesondere Kunststofffolien zur Herstellung der Schicht (B), welche zur Herstellung des erfindungsgemäßen Schichtaufbaus beispielsweise in das erfindungsgemäße Verfahren eingesetzt werden können, sind bisher in der Literatur nicht beschrieben.

Solche Kunststofffolien für die Schicht (B) werden aus einer Kunststoffzusammensetzung enthaltend das oder die Poly- oder Copolykondensate der Terephthalsäure oder Naphthalindicarbonsäure der Cyclohexan-dimethanol-1,4 modifizierten Polyesterkomponente hergestellt. Die Herstellung erfolgt bevorzugt mittels Extrusion.

Gegenstand der vorliegenden Erfindung ist daher ein Verfahren zur Herstellung eines erfindungsgemäßen Schichtaufbaus, bei dem
- wenigstens eine Kunststofffolie oder wenigstens eine Schicht einer Kunststofffolie aus einer Kunststoffzusammensetzung enthaltend wenigstens ein Poly- oder Copolykondensat der Terephthalsäure oder Naphthalindicarbonsäure der Cyclohexan-dimethanol-1,4 modifizierten Polyesterkomponente hergestellt wird, dadurch gekennzeichnet, dass der Kunststoffzusammensetzung für die Herstellung der Schicht(en) (B) wenigstens ein Phosphit zugegeben wird, wobei "Phosphit" ein Ester der Phosphonsäure mit der allgemeinen Struktur P(OR)3 bedeutet, bei dem R für aliphatische, aromatische und/oder cycloaliphatische Kohlenwasserstoffreste steht, wobei die Kohlenwasserstoffreste R gegebenenfalls noch Heteroatome enthalten können und wobei die aromatischen Kohlenwasserstoffreste weitere Substituenten aufweisen können
- wenigstens eine dieser Kunststofffolien zusammen mit einer Kunststoffolie für die Schicht (A) und gegebenenfalls einer oder mehrerer weiterer Kunststofffolien in der gewünschten Reihenfolge zu einem Folienstapel zusammengelegt wird
- und diese Folien mittels Lamination miteinander zu einen Schichtaufbau miteinander verbunden.

Bei der Reihenfolge des Aufeinanderlegens der Kunststofffolien ist die Kunststofffolie oder die Schicht der Kunststofffolie hergestellt aus der Kunststoffzusammensetzung enthaltend die Cyclohexan-dimethanol-1,4 modifizierte Polyesterkomponete eine der beiden Außenschichten. Im Falle des Einsatzes mehr als einer dieser Kunststofffolien werden bevorzugt beide Außenschichten von einer dieser Kunststofffolien oder einer Schicht dieser Kunststofffolie hergestellt aus einer Kunststoffzusammensetzung enthaltend die erfindungsgemäße Polyesterkomponente gebildet.

Weiterhin bevorzugt ist ein Verfahren zur Herstellung eines erfindungsgemäßen Schichtaufbaus, bei dem wenigstens eine Schicht (B) und wenigstens eine Schicht (A) mittels Co-Extrusion hergestellt werden, wobei für die Co-Extrusion der Schicht (B) eine Kunststoffzusammensetzung enthaltend die erfindungsgemäße Polyesterkomponente verwendet wird.

Gegenstand der vorliegenden Erfindung ist daher ebenfalls eine ein- oder mehrschichtige Kunststofffolie enthaltend wenigstens eine Schicht enthaltend eine Polyesterkomponente enthaltend wenigstens ein Poly- oder Copolykondensat der Terephthalsäure oder Naphthalindicarbonsäure, wobei die Polyesterkomponente Reste von Cyclohexan-dimethanol-1,4 in einer Menge von 25 bis 75 Mol.-% bezogen auf die Reste der Diolkomponente(n) in allen in der Polyesterkomponente enthaltenen Polyester, bevorzugt bezogen auf die Reste der Diolkomponente(n) in allen in der Polyesterkomponente enthaltenen Poly- oder Copolykondensaten der Terephthalsäure oder Naphthalindicarbonsäure, enthält dadurch gekennzeichnet, dass der Kunststoffzusammensetzung für die Herstellung dieser Schicht(en) (B) wenigstens ein Phosphit zugegeben wird, wobei "Phosphit" ein Ester der Phosphonsäure mit der allgemeinen Struktur P(OR)₃ bedeutet, bei dem R für aliphatische, aromatische und/oder cycloaliphatische Kohlenwasserstoffreste steht, wobei die Kohlenwasserstoffreste R gegebenenfalls noch Heteroatome enthalten können und wobei die aromatischen Kohlenwasserstoffreste weitere Substituenten aufweisen können.

In bevorzugten Ausführungsformen handelt es sich bei der erfindungsgemäßen Kunststofffolie um eine einschichtige Folie - auch als Monofolie bezeichnet - welche aus der Schicht enthaltend die Cyclohexan-dimethanol-1,4 modifizierte Polyesterkomponente besteht. Für die Cyclohexan-dimethanol-1,4 modifizierte Polyesterkomponente kommen die vorangehend für den erfindungsgemäßen Schichtaufbau genannten Poly- oder Copolykondensate der Terephthalsäure oder Naphthalindicarbonsäure in Frage.

Die erfindungsgemäße Monofolie weist dabei bevorzugt eine Dicke von 20 bis 300 µm, besonders bevorzugt von 30 bis 200 µm, ganz besonders bevorzugt von 40 bis 150 µm auf.

Die erfindungsgemäße Monofolie kann in bevorzugten Ausführungsformen der Erfindung wenigstens ein lasersensibles Additiv aufweisen, wobei hierfür die vorangehend bereits für den erfindungsgemäßen Schichtaufbau genannten lasersensiblen Additive in Frage kommen.

Eine solche Monofolie kann beispielsweise hergestellt werden, indem eine Kunststoffzusammensetzung enthaltend die Cyclohexan-dimethanol-1,4 modifizierte Polyesterkomponente zu einer Folie extrudiert wird.

In weiteren bevorzugten Ausführungsformen der Erfindung handelt es sich bei der erfindungsgemäßen Kunststofffolie um eine mindestens zweischichtige Folie, welche zusätzlich zu der Schicht (B) enthaltend die Cyclohexan-dimethanol-1,4 modifizierte Polyesterkomponente wenigstens eine weitere Schicht (A) enthaltend wenigstens einen thermoplastischen Kunststoff aufweist. Bei den thermoplastischen Kunststoffen kann es sich dabei um die vorangehend bereits für den erfindungsgemäßen Schichtaufbau genannten handeln. Besonders bevorzugte Ausführungsformen der erfindungsgemäßen Kunststofffolie mit mindestens zwei Schichten sind solche Kunststofffolien, die wenigstens eine Schicht (A) enthaltend wenigstens einen thermoplastischen Kunststoff und wenigstens zwei Schichten (B) enthaltend die Cyclohexan-dimethanol-1,4 modifizierte Polyesterkomponente aufweisen, wobei sich wenigstens eine Schicht (A) zwischen zwei Schichten (B) befindet.

Die erfindungsgemäße mindestens zweischichtige Folie weist dabei bevorzugt eine Gesamtdicke von 20 µm bis 850 µm, besonders bevorzugt jeweils eine Dicke von 25 µm bis 700 µm, ganz besonders bevorzugt jeweils eine Dicke von 30 µm bis 500 µm auf. Bevorzugt weist bzw. weisen die Schicht(en) (B) eine Schickdicke von 10 µm bis 300 µm, besonders bevorzugt jeweils eine Dicke von 12,5 µm bis 200 µm, ganz besonders bevorzugt von 15 µm bis 150 µm auf. Bevorzugt weist die Schicht (A) eine Schickdicke von 20 µm bis 750 µm, besonders bevorzugt jeweils eine Dicke von 50 µm bis 700 µm, ganz besonders bevorzugt von 75 µm bis 650 µm auf.

Die erfindungsgemäße mindestens zweischichtige Folie kann in bevorzugten Ausführungsformen der Erfindung wenigstens in einer Schicht wenigstens ein lasersensibles Additiv aufweisen, wobei hierfür die vorangehend bereits für den erfindungsgemäßen Schichtaufbau genannten lasersensiblen Additive in Frage kommen. Die erfindungsgemäße mindestens zweischichtige Folie kann wenigstens ein lasersensibles Additiv in wenigstens einer Schicht (A) aufweisen. Alternativ kann die erfindungsgemäße mindestens zweischichtige Folie wenigstens ein lasersensibles Additiv in der oder wenigstens einer der Schichten (B) aufweisen. Die erfindungsgemäße mindestens zweischichtige Folie kann auch sowohl in wenigstens einer Schicht (A) als auch in der oder wenigstens einer der Schichten (B) wenigstens ein lasersensibles Additiv aufweisen.

Die erfindungsgemäße mindestens zweischichtige Folie kann in bevorzugten Ausführungsformen der Erfindung in der oder wenigstens einer der weiteren Schicht(en) (A) als thermoplastischen Kunststoff wenigstens ein Polycarbonat oder Copolycarbonat oder wenigstens ein Poly- oder Copolykondensat der Terephthalsäure oder Naphthalindicarbonsäure enthalten.

Bevorzugt kann die oder wenigstens eine der weiteren Schicht(en) (A) mit Pigmenten weiß eingefärbt oder mit Füllstoffen gefüllt, d.h. weiß oder transluzent sein.

Die mindestens zweilagigen Kunststofffolien können beispielsweise durch Co-Extrusion oder durch Lamination hergestellt werden.

In der erfindungsgemäßen Kunststofffolie - sowohl der Monofolien als auch der mindestens zweischichtigen Folien - wird der Kunststoffzusammensetzung für die Herstellung der Schicht(en) (B) wenigstens ein Phosphit zugegeben.

In weiteren ganz besonders bevorzugten Ausführungsformen der erfindungsgemäßen Kunststofffolie - sowohl der Monofolien als auch der mindestens zweischichtigen Folien - enthält oder enthalten die Schicht oder die Schicht(en) (B) zusätzlich wenigstens ein Polycarbonat oder Copolycarbonat auf Basis von Diphenolen, wobei das oder die Polycarbonat(e) oder Copolycarbonat(e) bevorzugt in einer Menge von 30 Gew.-% oder weniger, besonders bevorzugt von 0,1 bis 25 Gew.-%, ganz besonders bevorzugt von 0,5 bis 20 Gew.-%, bezogen auf das Gesamtgewicht der Kunststoffzusammensetzung der jeweiligen Schicht, enthalten sind. Als Polycarbonat(e) oder Copolycarbonat(e) kommen dabei die vorangehend für die erfindungsgemäßen Schichtaufbauten bereits genannten in Frage.

Im Folgenden werden beispielhafte Ausführungsformen von Kunststofffolien genannt.

### Beispielhafte Monofolien:

Folie enthaltend eine Polyesterkomponente enthaltend wenigstens ein/wenigstens eine Cyclohexan-dimethanol-1,4-Einheit enthaltendes Poly- oder Copolykondensat der Terephthalsäure oder Naphthalindicarbonsäure, bevorzugt der Terephthalsäure.

Folie enthaltend eine Polyesterkomponente enthaltend wenigstens ein/wenigstens eine Cyclohexan-dimethanol-1,4-Einheit enthaltendes Poly- oder Copolykondensat der Terephthalsäure oder Naphthalindicarbonsäure, bevorzugt der Terephthalsäure, und wenigstens ein Polycarbonat oder Copolycarbonat auf Basis von Diphenolen.

Folie enthaltend eine Polyesterkomponente enthaltend wenigstens ein/wenigstens eine Cyclohexan-dimethanol-1,4-Einheit enthaltendes Poly- oder Copolykondensat der Terephthalsäure oder Naphthalindicarbonsäure, bevorzugt der Terephthalsäure, wenigstens ein Polycarbonat oder Copolycarbonat auf Basis von Diphenolen und wenigstens ein lasersensibles Additiv.

In den vorgenannten beispielhaften Ausführungsformen wird der Kunststoffzusammensetzung zur Herstellung der Monofolie wenigstens ein Phosphit zugegeben.

### Beispielhafte 2-Schicht-Folien:

Folie enthaltend eine Schicht (B) mit einer Zusammensetzung gemäß der vorangehend genannten Monofolien sowie eine weitere Schicht (A) enthaltend wenigstens ein Poly- oder Copolykondensat der Terephthalsäure oder Naphthalindicarbonsäure, bevorzugt der Terephthalsäure, und/oder wenigstens ein Polycarbonat oder Copolycarbonat auf Basis von Diphenolen.

Folie enthaltend eine Schicht (B) mit einer Zusammensetzung gemäß der vorangehend genannten Monofolien sowie eine weitere Schicht (A) enthaltend wenigstens ein Poly- oder Copolykondensat der Terephthalsäure oder Naphthalindicarbonsäure, bevorzugt der Terephthalsäure, und/oder wenigstens ein Polycarbonat oder Copolycarbonat auf Basis von Diphenolen, wobei die weitere Schicht weiß oder transluzent ist.

### Beispielhafte 3-Schicht-Folien:

Folie enthaltend zwei Schichten (B) mit einer Zusammensetzung gemäß der vorangehend genannten Monofolien sowie eine zwischen diesen beiden Schichten (B) angeordnete weitere Schicht (A) enthaltend wenigstens ein Poly- oder Copolykondensat der Terephthalsäure oder Naphthalindicarbonsäure, bevorzugt der Terephthalsäure, und/oder wenigstens ein Polycarbonat oder Copolycarbonat auf Basis von Diphenolen.

Folie enthaltend zwei Schichten (B) mit einer Zusammensetzung gemäß der vorangehend genannten Monofolien sowie eine zwischen diesen beiden Schichten (B) angeordnete weitere Schicht (A) enthaltend wenigstens ein Poly- oder Copolykondensat der Terephthalsäure oder Naphthalindicarbonsäure, bevorzugt der Terephthalsäure, und/oder wenigstens ein Polycarbonat oder Copolycarbonat auf Basis von Diphenolen, wobei die weitere Schicht weiß oder transluzent ist.

Zusätzlich zur Herstellung des erfindungsgemäßen Schichtaufbaus eignet sich die erfindungsgemäße Kunststofffolie unter anderem auch bereits selbst als Farb-Akzeptor-Folie im Dye Diffusion Thermal Transfer Druck.

Der erfindungsgemäße Schichtaufbau bzw. die erfindungsgemäße Kunststofffolie eignet sich zudem bevorzugt zur Herstellung von Sicherheits- und oder Wertdokumenten.

Gegenstand der vorliegenden Erfindung ist daher auch ein Sicherheits- und/oder Wertdokument enthaltend wenigstens einen erfindungsgemäßen Schichtaufbau, bevorzugt enthaltend einen erfindungsgemäßen Schichtaufbau.

Bevorzugt handelt es sich bei dem erfindungsgemäßen Sicherheits- und/oder Wertdokument um ein Identifikationsdokument, bevorzugt eine Identifikationskarte (ID-Karte), wie z.B. einen Personalausweis, Reisepass, Führerschein, eine Bankkarte, Kreditkarte, Versicherungskarte, sonstige Ausweiskarte etc..

Die Schicht(en) enthaltend die Cyclohexan-dimethanol-1,4 modifizierte Polyesterkomponente im erfmdungsgemäßen Schichtaufbau, in der erfindungsgemäßen Kunststofffolie oder im erfmdungsgemäßen Sicherheits- und/oder Wertdokument können mittels Dye Diffusion Thermal Transfer Druck bedruckt werden. Dabei zeigt sich eine besonders gute Farbintensität des Druckbildes im Gegensatz zu anderen Kunststoffzusammensetzungen der Farb-Akzeptor-Schichten.

Gegenstand der vorliegenden Erfindung ist daher auch die Verwendung eines erfmdungsgemäßen Schichtaufbaus, einer erfindungsgemäßen Kunststofffolie oder eines erfindungsgemäßen Sicherheits- und/oder Wertdokuments zum Bedrucken der oder wenigstens einer der Schicht(en) enthaltend eine Polyesterkomponente enthaltend wenigstens einen Poly- oder Copolykondensat der Terephthalsäure oder Naphthalindicarbonsäure, wobei die Polyesterkomponente Reste von Cyclohexan-dimethanol-1,4 in einer Menge von 25 bis 75 Mol.-% bezogen auf die Reste der Diolkomponente(n) in allen in der Polyesterkomponente enthaltenen Poly- oder Copolyestern, bevorzugt bezogen auf die Reste der Diolkomponente(n) in allen in der Polyesterkomponente enthaltenen Poly- oder Copolykondensaten der Terephthalsäure oder Naphthalindicarbonsäure, enthält, mittels Dye Diffusion Thermal Transfer Druck.

Die Schicht(en) enthaltend die Cyclohexan-dimethanol-1,4 modifizierte Polyesterkomponente im erfindungsgemäßen Schichtaufbau, in der erfindungsgemäßen Kunststofffolie oder im erfindungsgemäßen Sicherheits- und/oder Wertdokument weisen dabei hervorragende Farbaufnehmereigenschaften auf. Beim Bedrucken mittels Dye Diffusion Thermal Transfer Druck wurde überraschend gefunden, dass die Druckfarbe in diese Schicht(en) in eine Tiefe von mehr als 30 µm, bevorzugt sogar von mehr als 50 µm eindringt, vorausgesetzt, die Schichtdicke der betreffenden Schicht übersteigt die 30 µm, bevorzugt die 50 µm. Es kann daher für das Bedrucken mittels Dye Diffusion Thermal Transfer Druck in bevorzugten Ausführungsformen vorteilhaft sein eine Schichtdicke der Schicht(en) (B) in den erfindungsgemäßen Schichtaufbauten bzw. Sicherheits- und/oder Wertdokumenten oder eine Schichtdicke der entsprechenden Schicht(en) in den erfindungsgemäßen Kunststofffolien von mindestens 30 µm, bevorzugt von mindestens 50 µm zu wählen. Dadurch kann die Farbintensität des Druckbildes gegenüber dünneren Schichten noch weiter verbessert werden.

Die folgenden Beispiele dienen der exemplarischen Erläuterung der Erfindung aber sind nicht anspruchsgemäß.

### Beispiele

### Rohstoffe

### Makrolon® 3108

Makrolon® 3108 hochviskoses amorphes, thermoplastisches Bisphenol A-Polycarbonat mit einem MVR 6 g/10min nach ISO 1133 bei 300°C und 1,2 kg der Firma Bayer MaterialScience AG

### APEC® 9379

Trimethylcyclohexyl (TMC)-Bisphenol-Bisphenol A Copolycarbonat APEC® 9379 mit einem MFR 8 g/10min nach ISO 1133 bei 330°C und 2,16 kg

### Plexiglas® 8N

Plexiglas® 8N eine amorphe, thermoplastische Kunststoff-Formmasse (PMMA). mit einem MFR 3 g/10min nach ISO 1133 bei 230°C und 3,8 kg der Firma Röhm GmbH & Co. KG

### Tritan™ FX 100

Tritan™ FX 100 ist ein amorpher Copolyester mit einer inherenten Viskosität von 0,71 dl/g (gemessen in einer 1:1 Mischung aus Phenol und Tetrachlorethan bei 25°C), der Firma Eastman Chemical (enthält 77 - 78 Mol-% Cyclohexandimethanol-1,4-Reste bezogen auf die Diolkomponente)

### Eastar™ DN 001

Als Poly- oder Copolykondensat der Terephthalsäure wurde ein Polyester der Terephthalsäure aus 54,9 Gew.-% Terephthalsäure, 9,3 Gew.-% (38 Mol-% bezogen auf die Diolkomponente) Ethylenglykol und 35,8 Gew.-% (62 Mol-% bezogen auf die Diolkomponente) Cyclohexandimethanol-1,4, mit einer inherenten Viskosität von 0,74 dl/g (gemessen in einer 1:1 Mischung aus Phenol und Tetrachlorethan bei 25°C), verwendet.

### Eastar™ PCT 13787

Polykondensat der Terephthalsäure aus 53,5 Gew.-% (100 Mol-% bezogen auf die Diolkomponente) Terephthalsäure, und 46,5 Gew-% (100 Mol-% bezogen auf die Diolkomponente) Cyclohexandimethanol-1,4.

### Herstellung bzw. Bereitstellung der Masterbatches (Zusammensetzungen) für die Herstellung der Schichtaufbauten

### Beispiel 1: Compoundierung eines Masterbatches enthaltend einen thermoplastischen Kunststoff und ein Weißpigment als Füllstoff

Die Herstellung Masterbatches für die Herstellung der Schicht enthaltend einen thermoplastischen Kunststoff und ein Weißpigment als Füllstoff erfolgte mit einem herkömmlichen Zweischnecken-Compoundierextruder (ZSK 32) bei für Polycarbonat üblichen Verarbeitungstemperaturen von 250 bis 330°C.

Es wurde ein Master-Batch mit folgender Zusammensetzung compoundiert und anschließend granuliert:
- Polycarbonat Makrolon® 3108 der Fa. Bayer MaterialScience AG mit einem Anteil von 85 Gew.-%
- Titandioxid (Kronos® 2230 der Fa. Kronos Titan) als Weißpigment-Füllstoff mit einem Anteil von 15 Gew.-%.

### Herstellung der Schichtaufbauten:

### Beispiel 2: Herstellung von Extrusionsfolien

Die verwendete Anlage zur Herstellung der coextrudierten Folie(n) umfasst:
▪ einen Extruder zur Extrusion der Schicht enthaltend wenigstens ein Polycarbonat mit einer Schnecke von 60 mm Durchmesser (D) und einer Länge von 33 D. Die Schnecke weist eine Entgasungszone auf;
▪ eine Schmelzepumpe;
▪ einem Umlenkkopf;
▪ eine Breitschlitzdüse mit 450 mm Breite;
▪ einen Dreiwalzen-Glättkalander mit horizontaler Walzenanordnung, wobei die dritte Walze um +/- 45° gegenüber der Horizontalen schwenkbar ist;
▪ eine Rollenbahn;
▪ Dickenmessung
▪ eine Einrichtung zum beidseitigen Aufbringen von Schutzfolie;
▪ einer Abzugseinrichtung;
▪ eine Aufwickelstation.

Das Granulat wurde aus dem Trockner in den Fülltrichter des Extruders gefördert. Im Plastifiziersystem Zylinder/Schnecke des Extruders erfolgte das Aufschmelzen und Fördern des Materials. Von der Breitschlitz-Düse gelangte die Schmelze auf den Glättkalander. Auf dem Glättkalander (bestehend aus drei Walzen) erfolgte die endgültige Formgebung und Abkühlung der Folie. Zur Prägung der Oberflächen wurden eine strukturierte Stahl-Walze (6-er Seite) und eine strukturierte Silikon-Gummi-Walze (2-er Seite) eingesetzt. Die für die Strukturierung der Folienoberfläche verwendete Gummi-Walze ist in US-4 368 240 der Fa. Nauta Roll Corporation offenbart. Anschließend wurde die Folie durch einen Abzug transportiert und danach erfolgte die Aufwicklung der Folie.

Hieraus wurden Folien mit zwei strukturierten Seiten mit einer Schichtdicke von 85 µm extrudiert. Es ist zu beachten, dass die Beispielen 7 und 8 in der nachfolgenden Tabelle auch nicht gemäß den Ansprüchen sind.

| | Rezeptur | Schmelzetemperatur |
|---|---|---|
| Beispiel 2 (nicht erfindungsgemäß) | Makrolon® 3108 | 300°C |
| Beispiel 3 (nicht erfindungsgemäß) | APEC® 9379 | 320°C |
| Beispiel 4 (nicht erfindungs gemäß) | Plexiglas® 8N | 230°C |
| Beispiel 5 (nicht erfindungs gemäß) | Tritan™ FX 100 (enthält 77 - 78 Mol-% Cyclohexandimethanol-1,4 Reste bezogen auf die Diolkomponente) | 230°C |
| Beispiel 6 (nicht erfindungsgemäß) | Eastar™ PCT 13787 (enthält 100 Mol-% Cyclohexandimethanol-1,4 Reste bezogen auf die Diolkomponente) | 275°C |
| Beispiel 7 (erfindungsgemäß) | Eastar™ DN 001 (enthält 62 Mol-% Cyclohexandimethanol-1,4 Reste bezogen auf die Diolkomponente) | 250°C |
| Beispiel 8 (erfindungsgemäß) | Blend 33 % Eastar™ PCT 13787 + 67% Eastar™ DN 001 (enthält insgesamt 74 Mol-% Cyclohexandimethanol-1,4 Reste bezogen auf die Diolkomponente(n)) | 260°C |
| Beispiel 9(nicht erfindungs gemäß) | Blend 50 % Eastar™ PCT 13787 +50 % Eastar™ DN 001 (enthält insgesamt 81 Mol-% Cyclohexandimethanol-1,4 Reste bezogen auf die Diolkomponente(n)) | 270°C |

### Beispiel 10: Herstellung von mittels Dye Diffusion Thermal Transfer Druck bedruckbaren, nicht laserbaren Identifikationsdokumenten (ID-Karten)

### a) Herstellung eines Prelams:

### Folie 1-1: weiß gefüllte Folie

Es wurde eine Polycarbonatfolie der Dicke 125 µm auf Basis Polycarbonat Makrolon 3108® der Bayer MaterialScience AG und Titandioxid (Kronos® 2230 der Fa. Kronos Titan) als Weißpigment-Füllstoff aus dem Masterbatch aus Beispiel 1 bei einer Massetemperatur von ca. 280°C mittels Extrusion hergestellt.

### Folie 1-2: weiß gefüllte Folie

Es wurde eine Folie mit der gleichen Zusammensetzung wie Folie 1-1 der Dicke 400 µm hergestellt.

Aus den vorangehend aufgeführten Folien wurde wie im Folgenden beschrieben ein Schichtaufbau in Form eines sogenannten Prelams laminiert:
Schicht (1): Folie 1-1; 125 µm
Schicht (2): Folie 1-2; 400 µm
Schicht (3): Folie 1-1; 125 µm

In obigem Versuchsaufbau wurden die Schichten (1) und (3) eingesetzt, um eine vergleichbare Gesamtschichtdicke der laminierten Karte zu gewährleisten (vgl. ISO IEC 7810:2003). Es wurde ein symmetrischer Schichtaufbau der Karte gewählt, um ein Verbiegen der Karte zu vermeiden.

Dazu wurde aus den Folien jeweils ein Stapel in der oben genannten Reihenfolge gebildet und die Lamination wurde auf einer Laminationspresse der Firma Bürkle mit folgenden Parametern durchgeführt:
- Vorheizen der Presse auf 175°C
- Pressen für 8 Minuten bei einem Druck von 5 bar
- Pressen für 2 Minuten bei einem Druck von 80 bar
- Abkühlen der Presse auf 38°C und öffnen der Presse.

### b) Herstellung einer ID-Karte

Auf das so hergestellte Prelam wurden Folien aus Beispiel 4 bis 9 unter den folgenden Bedingungen auflaminiert:
Schicht (1): Folien aus Beispiel 4 bis 9, 85 µm
Schicht (2): Prelam
Schicht (3): Folien aus Beispiel 4 bis 9, 85 µm

Dazu wurde aus den Folien jeweils ein Stapel in der oben genannten Reihenfolge gebildet und die Lamination wurde auf einer Laminationspresse der Firma Bürkle mit folgenden Parametern durchgeführt:
- Vorheizen der Presse auf 155°C
- Pressen für 8 Minuten bei einem Druck von 5 bar
- Pressen für 2 Minuten bei einem Druck von 80 bar
- Abkühlen der Presse auf 38°C und öffnen der Presse.

Auf das so hergestellte Prelam wurden Folien aus Beispiel 2 bis 3 unter den folgenden Bedingungen auflaminiert:
Schicht (1): Folien aus Beispiel 2 bis 3, 85 µm
Schicht (2): Prelam
Schicht (3): Folien aus Beispiel 2 bis 3, 85 µm

Dazu wurde aus den Folien jeweils ein Stapel in der oben genannten Reihenfolge gebildet und die Lamination wurde auf einer Laminationspresse der Firma Bürkle mit folgenden Parametern durchgeführt:
- Vorheizen der Presse auf 190°C
- Pressen für 8 Minuten bei einem Druck von 5 bar
- Pressen für 2 Minuten bei einem Druck von 80 bar
- Abkühlen der Presse auf 38°C und öffnen der Presse.

### Beispiel 11: Bedruckung der ID-Karten aus dem Beispiel 10 mit Dye Diffusion Thermal Transfer Druck (D2T2-Druck)

Auf den ID-Karten aus Beispiel 10 wurden Druckversuche auf einer Anlage der Firma Nisca PR 5310 mit folgenden Parametern durchgeführt:
- Druckmodus:: 4-Farbdruck,
- Farbband:: YMCKO02
- Auflösung:: 300 dpi (11,8 dots/mm)
Vollflächiger Druck eines farbigen Bildes

Die Ergebnisse zeigten, dass der Kontrast, und damit die Abbildungsschärfe, sowie die Farbintensität der mittels D2T2-Druck in die die erfindungsgemäßen Schichtaufbauten enthaltenden ID-Karten eingebrachten farbigen Bilder deutlich höher waren als bei der ID-Karte aus den Vergleichsbeispielen 2 bis 6 und 9. Nicht nur die farbigen Teile des Aufdrucks, sondern auch die schwarzen Teile des Aufdrucks zeigten den deutlich besseren Kontrast und die deutlich bessere Farbintensität bei den die erfindungsgemäßen Schichtaufbauten enthaltenden ID-Karten aus dem Beispielen 7 und 8. Die schwarz gedruckten Passagen auf der ID-Karte aus nicht erfindungsgemäßen Beispielen 2 bis 6 und 9 waren lediglich grau, wohingegen diese Passagen auf den ID-Karten aus den Beispielen 7 und 8 intensiv schwarz waren. Die farbigen Passagen auf den ID-Karten aus dem Beispielen 7 und 8 zeigten eine deutlich höhere Farbbrillianz und Farbintensität in Gegensatz zu den signifikant blasseren Farben auf der ID-Karte aus den Beispielen 3, 5, 6 und 9. Das Bild wies zudem auf den ID-Karten aus den Beispielen 7 und 8 eine hohe Abbildungsschärfe auf, wohingegen es auf den ID-Karten aus den Beispielen 2 bis 6 unscharf war.

## Patentansprüche

1. Schichtaufbau enthaltend
- wenigstens eine Schicht (A) enthaltend wenigstens einen thermoplastischen Kunststoff und
- wenigstens eine Schicht (B) enthaltend eine Polyesterkomponente enthaltend wenigstens ein Poly- oder Copolykondensat der Terephthalsäure oder Naphthalindicarbonsäure,
wobei die Polyesterkomponente Reste von Cyclohexan-dimethanol-1,4 in einer Menge von 25 bis 75 Mol.-% bezogen auf die Reste der Diolkomponente(n) in allen in der Polyesterkomponente enthaltenen Poly- oder Copolyestern aufweist, **dadurch gekennzeichnet, dass** der Kunststoffzusammensetzung für die Herstellung der Schicht(en) (B) wenigstens ein Phosphit zugegeben wird, wobei "Phosphit" ein Ester der Phosphonsäure mit der allgemeinen Struktur P(OR)₃ bedeutet, bei dem R für aliphatische, aromatische und/oder cycloaliphatische Kohlenwasserstoffreste steht, wobei die Kohlenwasserstoffreste R gegebenenfalls noch Heteroatome enthalten können und wobei die aromatischen Kohlenwasserstoffreste weitere Substituenten aufweisen können.

2. Schichtaufbau gemäß Anspruch 1, **dadurch gekennzeichnet, dass** die Polyesterkomponente insgesamt Reste von Cyclohexan-dimethanol-1,4 in einer Menge von 30 bis 75 Mol.-%, besonders bevorzugt von 40 bis 75 Mol.-%, ganz besonders bevorzugt von 50 bis 75 Mol.-%, bezogen auf die Reste der Diolkomponente(n) in allen in der Polyesterkomponente enthaltenen Poly- oder Copolyestern, bevorzugt bezogen auf die Reste der Diolkomponente(n) in allen in der Polyesterkomponente enthaltenen Poly- oder Copolykondensaten der Terephthalsäure oder Naphthalindicarbonsäure, aufweist.

3. Schichtaufbau gemäß Anspruch 1 oder 2, **dadurch gekennzeichnet, dass** die Polyesterkomponente ein oder mehrere Cyclohexan-dimethanol-1,4-Einheiten enthaltende Poly- oder Copolykondensate der Terephthalsäure oder Naphthalindicarbonsäure, welche als weitere Reste einer von mehreren Diolkomponenten solche von Ethylenglykol und/oder Butandiol-1,4 enthalten, gegebenenfalls im Gemisch mit Poly(cyclohexan-dimethanol-1,4)-terephthalat und/oder Poly(cyclohexan-dimethanol-1,4)-naphthalat enthält.

4. Schichtaufbau gemäß wenigstens einem der Ansprüche 1 bis 3, **dadurch gekennzeichnet, dass** Schicht (A) wenigstens einen thermoplastischen Kunststoff ausgewählt aus Polycarbonaten oder Copolycarbonaten auf Basis von Diphenolen, Poly- oder Copolyacrylaten und Poly- oder Copolymethacrylaten, Poly- oder Copolymeren mit Styrol, transparenten thermoplastischne Polyurethanen, Polyolefinen und Poly- oder Copolykondensaten der Terephthalsäure oder Naphthalindicarbonsäure, bevorzugt wenigstens ein Polycarbonat oder Copolycarbonat auf Basis von Diphenolen enthält.

5. Schichtaufbau gemäß wenigstens einem der Ansprüche 1 bis 4, **dadurch gekennzeichnet, dass** es sich bei Schicht (A) um eine weiße oder transluzente Schicht handelt.

6. Schichtaufbau gemäß wenigstens einem der Ansprüche 1 bis 5, **dadurch gekennzeichnet, dass** sich Schicht (A) zwischen zwei Schichten (B) befindet.

7. Schichtaufbau gemäß wenigstens einem der Ansprüche 1 bis 6, **dadurch gekennzeichnet, dass** er zwischen Schicht (A) und der oder den Schicht(en) (B) wenigstens eine weitere Schicht enthaltend wenigstens einen thermoplastischen Kunststoff aufweist.

8. Schichtaufbau gemäß wenigstens einem der Ansprüche 1 bis 7, **dadurch gekennzeichnet, dass** das Phosphit, ein Oxetangruppen enthaltendes Phosphit ist.

9. Verfahren zur Herstellung eines Schichtaufbaus gemäß wenigstens einem der Ansprüche 1 bis 8, **dadurch gekennzeichnet, dass** verschiedene Kunststofffolien mittels Lamination miteinander verbunden oder der Schichtaufbau mittels Co-extrusion hergestellt wird.

10. Sicherheits- und/oder Wertdokument, **dadurch gekennzeichnet, dass** es einen Schichtaufbau gemäß wenigstens einem der Ansprüche 1 bis 8 enthält.

11. Sicherheits- und/oder Wertdokument gemäß Anspruch 10, **dadurch gekennzeichnet, dass** es sich dabei um ein Identifikationsdokument, bevorzugt um eine ID-Karte handelt.

12. Verwendung eines Schichtaufbaus gemäß wenigstens einem der Ansprüche 1 bis 8 oder eines Sicherheits- und/oder Wertdokuments gemäß Anspruch 10 oder 11 zum Bedrucken der oder wenigstens einer der Schicht(en) (B) mittels Dye Diffusion Thermal Transfer Druck.

13. Ein- oder mehrschichtige Kunststofffolie enthaltend wenigstens eine Schicht enthaltend eine Polyesterkomponente enthaltend wenigstens ein Poly- oder Copolykondensat der Terephthalsäure oder Naphthalindicarbonsäure, **dadurch gekennzeichnet, dass** die Polyesterkomponente Reste von Cyclohexan-dimethanol-1,4 in einer Menge von 25 bis 75 Mol.-% bezogen auf die Reste der Diolkomponente(n) in allen in der Polyesterkomponente enthaltenen Poly- oder Copolyestern aufweist, **dadurch gekennzeichnet, dass** der Kunststoffzusammensetzung zur Herstellung der mindestens einen Schich wenigstens ein Phosphit zugegeben wird, wobei "Phosphit" ein Ester der Phosphonsäure mit der allgemeinen Struktur P(OR)₃ bedeutet, bei dem R für aliphatische, aromatische und/oder cycloaliphatische Kohlenwasserstoffreste steht, wobei die Kohlenwasserstoffreste R gegebenenfalls noch Heteroatome enthalten können und wobei die aromatischen Kohlenwasserstoffreste weitere Substituenten aufweisen können..

14. Kunststofffolie gemäß Anspruch 13, **dadurch gekennzeichnet, dass** sie wenigstens eine weitere Schicht enthaltend wenigstens einen thermoplastischen Kunststoff aufweist.

15. Kunststofffolie gemäß Anspruch 13 oder 14, **dadurch gekennzeichnet, dass** sie wenigstens eine Schicht (A) enthaltend wenigstens einen thermoplastischen Kunststoff und wenigstens zwei Schichten (B) enthaltend eine Polyesterkomponente enthaltend wenigstens ein Poly- oder Copolykondensat der Terephthalsäure oder Naphthalindicarbonsäure aufweist, wobei die Polyesterkomponente Reste von Cyclohexan-dimethanol-1,4 in einer Menge von 25 bis 75 Mol.-% bezogen auf die Reste der Diolkomponente(n) in allen in der Polyesterkomponente enthaltenen Poly- oder Copolyestern aufweist, wobei sich wenigstens eine Schicht (A) zwischen zwei Schichten (B) befindet.

## Claims

1. Layer construction comprising
- at least one layer (A) comprising at least one thermoplastic and
- at least one layer (B) comprising a polyester component comprising at least one poly- or copolycondensate of terephthalic acid or naphthalenedicarboxylic acid,
wherein the polyester component has radicals of cyclohexane-1,4-dimethanol in an amount of from 25 to 75 mol%, based on the radicals of the diol component(s) in all the poly- or copolyesters which the polyester component comprises, **characterized in that** at least one phosphite is added to the plastics composition for the production of the layer(s) (B), wherein "phosphite" means an ester of phosphonic acid having general formula P(OR)₃ where R represents aliphatic, aromatic and/or cycloaliphatic hydrocarbon radicals, wherein the hydrocarbon radicals R may optionally also contain heteroatoms and wherein the aromatic hydrocarbon radicals may comprise further substituents.

2. Layer construction according to Claim 1, **characterized in that** the polyester component has in total radicals of cyclohexane-1,4-dimethanol in an amount of from 30 to 75 mol%, particularly preferably from 40 to 75 mol%, very particularly preferably from 50 to 75 mol%, based on the radicals of the diol component(s) in all the poly-or copolyesters which the polyester component comprises, preferably based on the radicals of the diol component(s) in all the poly- or copolycondensates of terephthalic acid or naphthalenedicarboxylic acid which the polyester component comprises.

3. Layer construction according to Claim 1 or 2, **characterized in that** the polyester component comprises poly- or copolycondensates of terephthalic acid or naphthalenedicarboxylic acid comprising one or more cyclohexane-1,4-dimethanol units, which comprise as further radicals of one of several diol components those of ethylene glycol and/or butane-1,4-diol, optionally in a mixture with poly(cyclohexane-1,4-dimethanol) terephthalate and/or poly(cyclohexane-1,4-dimethanol) naphthalate.

4. Layer construction according to at least one of Claims 1 to 3, **characterized in that** layer (A) comprises at least one thermoplastic chosen from polycarbonates or copolycarbonates based on diphenols, poly- or copolyacrylates and poly- or copolymethacrylates, poly- or copolymers with styrene, transparent thermoplastic polyurethanes, polyolefins and poly- or copolycondensates of terephthalic acid or naphthalenedicarboxylic acid, preferably at least one polycarbonate or copolycarbonate based on diphenols.

5. Layer construction according to at least one of Claims 1 to 4, **characterized in that** layer (A) is a white or translucent layer.

6. Layer construction according to at least one of Claims 1 to 5, **characterized in that** layer (A) is between two layers (B).

7. Layer construction according to at least one of Claims 1 to 6, **characterized in that** between layer (A) and the layer (s) (B) it has at least one further layer comprising at least one thermoplastic.

8. Layer construction according to at least one of Claims 1 to 7, **characterized in that** the phosphite is a phosphite comprising oxetane groups.

9. Process for the production of a layer construction according to at least one of Claims 1 to 8, **characterized in that** various films of plastic are bonded to one another by means of lamination or the layer construction is produced by means of coextrusion.

10. Security and/or valuable document, **characterized in that** it comprises a layer construction according to at least one of Claims 1 to 8.

11. Security and/or valuable document according to Claim 10, **characterized in that** it is an identification document, preferably an ID card.

12. Use of a layer construction according to at least one of Claims 1 to 8 or of a security and/or valuable document according to Claim 10 or 11 for printing the or at least one of the layer (s) (B) by means of dye diffusion thermal transfer printing.

13. Single- or multilayer film of plastic comprising at least one layer comprising a polyester component comprising at least one poly- or copolycondensate of terephthalic acid or naphthalenedicarboxylic acid, **characterized in that** the polyester component has radicals of cyclohexane-1,4-dimethanol in an amount of from 25 to 75 mol%, based on the radicals of the diol component(s) in all the poly- or copolyesters which the polyester component comprises, **characterized in that** at least one phosphite is added to the plastics composition for the production of the at least one layer, wherein "phosphite" means an ester of phosphonic acid having general formula P(OR)₃ where R represents aliphatic, aromatic and/or cycloaliphatic hydrocarbon radicals, wherein the hydrocarbon radicals R may optionally also contain heteroatoms and wherein the aromatic hydrocarbon radicals may comprise further substituents.

14. Film of plastic according to Claim 13, **characterized in that** it has at least one further layer comprising at least one thermoplastic.

15. Film of plastic according to Claim 13 or 14, **characterized in that** it has at least one layer (A) comprising at least one thermoplastic and at least two layers (B) comprising a polyester component comprising at least one poly- or copolycondensate of terephthalic acid or naphthalenedicarboxylic acid, wherein the polyester component has radicals of cyclohexane-1,4-dimethanol in an amount of from 25 to 75 mol%, based on the radicals of the diol component (s) in all the poly- or copolyesters which the polyester component comprises, at least one layer (A) being between two layers (B).

## Revendications

1. Structure de couches, contenant :
- au moins une couche (A) contenant au moins un plastique thermoplastique et
- au moins une couche (B) contenant un composant polyester contenant au moins un poly- ou copolycondensat de l'acide téréphtalique ou de l'acide naphtaline-dicarboxylique,
le composant polyester comprenant des radicaux de cyclohexane-diméthanol-1,4 en une quantité de 25 à 75 % en moles par rapport aux radicaux du ou des composants diol dans tous les poly- ou copolyesters contenus dans le composant polyester, **caractérisée en ce qu'**au moins un phosphite est ajouté à la composition de plastique pour la fabrication de la ou des couches (B), un « phosphite » signifiant un ester de l'acide phosphonique de structure générale P(OR)₃, dans laquelle R représente des radicaux hydrocarbonés aliphatiques, aromatiques et/ou cycloaliphatiques, les radicaux hydrocarbonés R pouvant éventuellement également contenir des hétéroatomes et les radicaux hydrocarbonés aromatiques pouvant comprendre des substituants supplémentaires.

2. Structure de couches selon la revendication 1, **caractérisée en ce que** le composant polyester comprend au total des radicaux de cyclohexane-diméthanol-1,4 en une quantité de 30 à 75 % en moles, de manière particulièrement préférée de 40 à 75 % en moles, de manière tout particulièrement préférée de 50 à 75 % en moles, par rapport aux radicaux du ou des composants diol dans tous les poly- ou copolyesters contenus dans le composant polyester, de préférence par rapport aux radicaux du ou des composants diol dans tous les poly-ou copolycondensats de l'acide téréphtalique ou de l'acide naphtaline-dicarboxylique contenus dans le composant polyester.

3. Structure de couches selon la revendication 1 ou 2, **caractérisée en ce que** le composant polyester contient un ou plusieurs poly- ou copolycondensats de l'acide téréphtalique ou de l'acide naphtaline-dicarboxylique contenant des unités cyclohexane-diméthanol-1,4, qui contiennent en tant que radicaux supplémentaires d'un de plusieurs composants diols des radicaux d'éthylène glycol et/ou de butanediol-1,4, éventuellement en mélange avec du poly(cyclohexane-diméthanol-1,4)-téréphtalate et/ou du poly(cyclohexane-diméthanol-1,4)-naphtalate.

4. Structure de couches selon au moins l'une quelconque des revendications 1 à 3, **caractérisée en ce que** la couche (A) contient au moins un plastique thermoplastique choisi parmi les polycarbonates ou les copolycarbonates à base de diphénols, de poly- ou copolyacrylates et de poly- ou copolyméthacrylates, les poly- ou copolymères avec du styrène, les polyuréthanes thermoplastiques transparents, les polyoléfines et les poly- ou copolycondensats de l'acide téréphtalique ou de l'acide naphtaline-dicarboxylique, de préférence au moins un polycarbonate ou un copolycarbonate à base de diphénols.

5. Structure de couches selon au moins l'une quelconque des revendications 1 à 4, **caractérisée en ce que** la couche (A) consiste en une couche blanche ou translucide.

6. Structure de couches selon au moins l'une quelconque des revendications 1 à 5, **caractérisée en ce que** la couche (A) se trouve entre deux couches (B).

7. Structure de couches selon au moins l'une quelconque des revendications 1 à 6, **caractérisée en ce qu'**elle comprend entre la couche (A) et la ou les couches (B) au moins une couche supplémentaire contenant au moins un plastique thermoplastique.

8. Structure de couches selon au moins l'une quelconque des revendications 1 à 7, **caractérisée en ce que** le phosphite est un phosphite contenant des groupes oxétane.

9. Procédé de fabrication d'une structure de couches selon au moins l'une quelconque des revendications 1 à 8, **caractérisé en ce que** différentes feuilles en plastique sont reliées les unes avec les autres par stratification ou la structure de couches est fabriquée par co-extrusion.

10. Document de sécurité et/ou de valeur, **caractérisé en ce qu'**il contient une structure de couches selon au moins l'une quelconque des revendications 1 à 8.

11. Document de sécurité et/ou de valeur selon la revendication 10, **caractérisé en ce qu'**il consiste en un document d'identification, de préférence en une carte d'identité.

12. Utilisation d'une structure de couches selon au moins l'une quelconque des revendications 1 à 8 ou d'un document de sécurité et/ou de valeur selon la revendication 10 ou 11 pour l'impression de la ou d'au moins une des couches (B) par impression par transfert thermique à diffusion de colorant.

13. Feuille en plastique mono- ou multicouche contenant au moins une couche contenant un composant polyester contenant au moins un poly- ou copolycondensat de l'acide téréphtalique ou de l'acide naphtaline-dicarboxylique, **caractérisée en ce que** le composant polyester comprend des radicaux de cyclohexane-diméthanol-1,4 en une quantité de 25 à 75 % en moles par rapport aux radicaux du ou des composants diol dans tous les poly- ou copolyesters contenus dans le composant polyester, **caractérisée en ce qu'**au moins un phosphite est ajouté à la composition de plastique pour la fabrication de ladite au moins une couche, un « phosphite » signifiant un ester de l'acide phosphonique de structure générale P(OR)₃, dans laquelle R représente des radicaux hydrocarbonés aliphatiques, aromatiques et/ou cycloaliphatiques, les radicaux hydrocarbonés R pouvant éventuellement également contenir des hétéroatomes et les radicaux hydrocarbonés aromatiques pouvant comprendre des substituants supplémentaires.

14. Feuille en plastique selon la revendication 13, **caractérisée en ce qu'**elle comprend au moins une couche supplémentaire contenant au moins un plastique thermoplastique.

15. Feuille en plastique selon la revendication 13 ou 14, **caractérisée en ce qu'**elle comprend au moins une couche (A) contenant au moins un plastique thermoplastique et au moins deux couches (B) contenant un composant polyester contenant au moins un poly- ou copolycondensat de l'acide téréphtalique ou de l'acide naphtaline-dicarboxylique, le composant polyester comprenant des radicaux de cyclohexane-diméthanol-1,4 en une quantité de 25 à 75 % en moles par rapport aux radicaux du ou des composants diol dans tous les poly-ou copolyesters contenus dans le composant polyester, au moins une couche (A) se trouvant entre deux couches (B) .
